# EUROPEAN PATENT SPECIFICATION

(11) **EP 3 375 148 B1**
(45) Date of publication and mention of the grant of the patent: **05.01.2022**
(21) Application number: 16797632.3
(22) Date of filing: 14.11.2016
(51) Int. Cl.: H04L 12/28, H04J 3/14, H04L 12/823

(54) **ROUTER AND MESSAGE HANDLER FOR PROVIDING SCALABLE RECEIPTS OF CONTROL MESSAGES**
ROUTER UND NACHRICHTEN-HANDLER ZUM BEREITSTELLEN VON SKALIERBAREN EMPFÄNGERN VON STEUERNACHRICHTEN
ROUTEUR ET GESTIONNAIRE DE MESSAGES POUR FOURNIR DES REÇUS ÉCHELONNABLES DE MESSAGES DE COMMANDE

(30) Priority: 12.11.2015 GB 201520005
(43) Date of publication of application: 19.09.2018
(73) Proprietor: Vodafone IP Licensing Limited, Newbury, Berkshire RG14 2FN (GB)
(72) Inventor: HAIG, Andy, London Greater London W2 6BY (GB); BAILEY, Richard, London Greater London W2 6BY (GB)
(74) Representative: Boult Wade Tennant LLP
(86) International application number: PCT/GB2016/053564
(87) International publication number: WO 2017/081492

(56) References cited:
- WO-A1-2013/179269
- US-A1- 2007 242 606
- US-A1- 2011 172 841

## Description

### FIELD OF TECHNOLOGY

The present disclosure generally relates to the handling of instructions in a network for controlling remote nodes in the network. In particular, but not exclusively, it relates to the communication of receipts in response to instructions for controlling remote utility devices.

### BACKGROUND

Currently, a utility customer wanting to send instructions to control a utility device located remotely would, in some countries, send a message to a national teleswitch control handler where it is broadcast on a single transmission system, typically using a number of regional transmitters. The broadcast network would typically have a low capacity for messaging, and slow throughput, due to being multiplexed over a low frequency radio transmission, e.g. 200kHz. For example it would typically take 1-2 minutes to transmit a telecontrol message in existing systems. Due to its low capacity and speed it is not well suited to 'demand response' solutions, e.g. protecting operational stability of transmission or distribution grids. Moreover, current systems are not able to, or inefficient at, targeting nodes and determining the level of success of an attempt to control a plurality of remote nodes.

US-2007/242606 relates to controlling reverse link feedback in a mobile communication system by detecting reverse link load for at least one sector in the network and dynamically updating a control setting for a reverse link control channel responsive to the detected load.

WO-2013/179269 concern multicasting of data between a source device and a destination device, and in particular with situations in which the destination device is caused to: receive data from the source device, wherein at least one data unit is to be transmitted by the source device to a plurality of said destination devices; determine the progress of data reception, wherein the progress is measured in the number of data units received or not received; determine whether or not to transmit a feedback of data reception to the source device on the basis of predetermined criteria; and upon detecting that the feedback is to be transmitted, include an indication of the determined progress in the feedback and cause transmission of the feedback to the source device.

US-2011/172841 discusses a system that manages consumption of power supplied by at least one electric utility to multiple power consuming devices. Power flow to the power consuming devices is enabled and disabled by controllable devices controlled by one or more client devices.

### SUMMARY

The present invention provides an apparatus in a network for routing instructions for remotely controlling a plurality of nodes in the network in line with claim 1, a message handler apparatus in a network for controlling one or more of a plurality of nodes in the network in accordance with claims 7 and 15, a method of handling instructions for remotely controlling a plurality of nodes in a network in line with claim 12 and a method of acknowledging receipts of instructions to control one or more nodes of a plurality of nodes in a network as defined by claim 13.

According to a first aspect of the present disclosure, there is provided an apparatus in a network for routing instructions for remotely controlling a plurality of nodes in the network, the apparatus comprising: a communication interface for receiving a request comprising instructions for controlling a plurality of nodes, for communicating with one or more network capabilities for sending messages to one or more message handlers for controlling the plurality of nodes, and for receiving receipts from the one or more message handlers; and a message processing module configured to generate one or more messages for the instructions with at least one receipt generation optimiser parameter, and cause the one or more messages to be transmitted to the one or more network capabilities via the communication interface.

The message processing module may be configured to include the receipt generation optimiser parameter in the one or more messages in order to manage traffic generated by transmission of receipts, acknowledging receipt of the instructions, from the one or more message handlers.

By having router apparatus that can receive receipts from the message handlers, a feedback mechanism to a customer that made the request is provided. The customer can then be informed whether message handlers have received and acted on the instructions.

The at least one receipt generation optimiser parameter may comprise a parameter that indicates the proportion of message handlers from which a receipt to the one or more messages is required. Consequently, in some embodiments, a scalable mechanism for generating and handling receipts is provided. The parameter can be set such that even if the instructions are intended for a large number of message handlers the number of receipts generated and transmitted will not overload the network or cause traffic spikes.

The parameter may have a value that comprises a number between a low number, indicating that no message handlers are required to send receipts, and a high number, indicating that all message handlers that act on the instructions are required to send receipts.

The at least one receipt generation optimiser may comprise a parameter that indicates a time window within which a message handler is required to send a receipt if a receipt is required. This can further contribute to network stability and reduction of traffic spikes as the transmission of receipts can be spread over the time window.

The message processing module may further be configured to include an indication of an acceptable method of sending receipts in the one or more messages.

The indication of an acceptable method of sending receipts may comprise an indication that messages are required to be sent via short message service SMS. Alternatively, the indication of an acceptable method of sending receipts may comprise an indication that messages are required to be sent via a narrowband internet of things loT network. The enablement of an internet of things bearer as a medium for message receipts may allow high efficiency and low transmission costs. In some cases, more than one acceptable method of sending receipts may be indicated.

The communication interface may be configured to receive the receipts from the one or more message handlers via a communication channel independent of the one or more network capabilities. In other words, the receipt is not sent via the network capability that sent the instructions to the message handler that generated the receipt. Instead, the receipt is sent over a different communication channel or medium.

The message processing module may further be configured to include an address of the apparatus in the one or more messages to which receipts are to be sent.

The receipt may comprise at least one out of the time of receipt of the one or more messages by the message handler, the location of the message handler and an identifier for the instructions. By including the location of the message handler in the receipt, the apparatus and the customer can determine the location in which the delivery of the instructions were successful.

The message processing module may further be operable to generate a receipt summary based on received receipts to the one or more messages and cause the receipt summary to be sent to a customer associated with the request comprising the instructions. The receipt summary may be provided to a customer device associated with the customer.

The one or more network capabilities may comprise one or more network broadcast capabilities arranged to broadcast the one or more messages to a plurality of message handlers. The one or more messages may comprise a plurality of messages each comprising a segment of the instructions. Alternatively, the one or more messages may comprise a single message comprising the entire instructions.

The plurality of nodes may comprise at least one out of a meter, heater, generator and charger.

The apparatus may comprise one or more servers comprising one or more processing units operable to execute instructions in one or more memory units in the server and the message processing module may comprise the one or more processing units and the one or more memory units. The communication interface may comprise one or more different communication interfaces, modules or transceivers.

According to another aspect of the present disclosure, there is provided message handler apparatus in a network for controlling one or more of a plurality of nodes in the network, the message handler apparatus comprising: a plurality of communication interfaces for receiving messages from one or more network capabilities with instructions for controlling one or more nodes, the instructions having been routed by a router to the one or more network capabilities for forwarding to the message handler, for interfacing with the one or more nodes to carry out instructions in the messages on the nodes and for sending message receipts to the router; and a processor for processing information in the messages and controlling the plurality of communication interfaces, wherein the processor is operable to generate a receipt in response to receiving a message in accordance with at least one receipt generation optimiser parameter in the message and control a communication interface of the plurality of communication interfaces to send the receipt to the router.

The at least one receipt generation optimiser parameter may comprise a scaling factor parameter that indicates the proportion of message handlers from which a receipt to the one or more messages is desired. The scaling factor parameter may comprise a value that comprises a number between a low number, indicating that no receipt is required, and a high number, indicating that a receipt is required. The processor may be operable to generate a random number and generate the receipt if the random number is equal to or lower than the value of the scaling factor parameter.

The at least one receipt generation optimiser may comprise an indication of receipt time window within which the message handler is required to send a receipt, if a receipt is required, and the processor may be configured to control the communication interface to send the receipt within the receipt time window.

The message may comprise an indication of an acceptable messaging method for sending the receipt and the processor may be configured to select an interface, of the plurality of communication interfaces, that supports the acceptable messaging method in order to send the receipt.

The processor may be configured to control an interface of the plurality of communication interfaces to send the receipt via a channel independent of the network capabilities.

The processor may be configured to send the receipt to an address of the router indicated in the one or more messages.

The one or more messages may comprise a plurality of messages, each comprising a segment of the instructions and a message identifier comprising an identifier for the instructions and an identifier for the segment of the plurality of segments in the message and the processor may be operable to send a receipt once all the segments have been sent and include the identifier for the instructions in the receipt.

Additionally, or alternatively, the processor may be configured to include at least one out of a time of receipt of the one or more messages and a location of the message handler in the receipt.

According to another aspect of the present disclosure, there is provided a system comprising router apparatus as defined above and a message handler apparatus as set out above. The system may further comprise one or more network capabilities and a plurality of nodes.

According to another aspect of the present disclosure there is provided a method of handling instructions for remotely controlling a plurality of nodes in a network, the method comprising: processing a received request with instructions for controlling a plurality of nodes in the network; generating one or more messages associated with the instructions for transmitting to one or more network capabilities for the one or more network capabilities to forward the instructions to one or more message handlers for controlling the plurality of nodes; including in the one or more messages at least one receipt generation optimiser parameter for managing traffic generated by transmission of receipts to the one or more messages from one or more message handlers; causing the one or more messages to be sent to the selected network capabilities; and receiving one or more receipts associated with the instructions transmitted in accordance with the at least one receipt generation optimiser parameter.

The at least one receipt generation optimiser parameter may comprise a parameter indicating the proportion of message handlers from which a receipt to the one or more messages is required.

The at least one receipt generation optimiser may comprise a parameter that indicates a time window within which a message handler is required to send a receipt if a receipt is required.

The method may further comprise including an indication of an acceptable method of sending receipts and an address to which to send receipts in the one or more messages.

The method may further comprise generating a receipt summary based on the information in the one or more receipts and causing the receipt summary to be sent to a customer device.

The information in the one or more receipts may comprise at least one out of a message identifier for the instructions, a location of the message handler that sent the receipt and a time of receipt of the one or more messages at the message handler.

According to a further aspect of the present disclosure, there is provided a method of acknowledging receipts of instructions to control one or more nodes of a plurality of nodes in a network, the method comprising: processing one or more received messages comprising instructions for controlling the one or more nodes, the instructing having been routed, via a network capability, from a router for routing instructions to the plurality of nodes; controlling one or more modes in accordance with the instructions; generating a receipt to the one or more messages in accordance with a receipt generation optimiser parameter in the one or more messages; and causing the receipt to be sent to the router.

The at least one receipt generation optimiser parameter may comprise a scaling factor parameter that indicates the proportion of message handlers from which a receipt to the one or more messages is required.

The method may further comprise generating a random number and generating a receipt in accordance with the receipt generation optimiser parameter may comprise generating the receipt if the random number is equal to or lower than the value of the scaling factor parameter.

The one or more messages may comprise a second receipt generation optimiser comprising an indication of receipt time window within which the receipt is required to be sent and causing the receipt to be sent may comprise causing the receipt to be sent within the time window.

Causing the receipt to be sent may comprise causing the receipt to be sent via an acceptable messaging method and to an address indicated in the one or more messages.

The one or more messages may comprise a plurality of messages, each comprising a segment of the instructions and a message identifier comprising an identifier for the instructions and an identifier for the segment of the plurality of segments in the message. Generating the receipt may comprise generating the receipt once all the segments have been sent and including the identifier for the instructions in the receipt.

Generating the receipt may comprise including a time of receipt of the one or more messages and a location of the message handler in the receipt.

The methods described above may be computer-implemented methods.

According to yet another aspect of the present disclosure, there is provided a computer program comprising instructions that when executed by one or more processors cause the one or more processors to carry out the method described above. According to an aspect of the present disclosure, there is a machine readable storage storing the computer program.

According to a further aspect, there is provided apparatus in a network for routing instructions for remotely controlling a plurality of nodes in the network, the apparatus comprising: a communication interface for receiving a request comprising instructions for controlling a plurality of nodes, for communicating with one or more network capabilities for sending messages to one or more message handlers for controlling the plurality of nodes, and for receiving receipts from the one or more message handlers; and a message processing module configured to generate one or more messages for the instructions and cause the one or more messages to be transmitted to the one or more network capabilities via the communication interface, wherein the communication interface is arranged to receive receipts from the one or more message handlers via a communication path independent of the one or more network capabilities for sending messages to the one or more message handlers. The one or more network capabilities may be network broadcast capabilities arranged to broadcast the messages. The communication path may comprise a short message service SMS communication channel or a narrowband internet of things loT bearer.

According to an additional aspect of the present disclosure, there is provided message handler apparatus in a network for controlling one or more of a plurality of nodes in the network, the message handler apparatus comprising: a plurality of communication interfaces for receiving messages from one or more network capabilities with instructions for controlling one or more nodes, the instructions having been routed by a router to the one or more network capabilities for forwarding to the message handler, for interfacing with the one or more nodes to carry out instructions in the messages on the nodes and for sending message receipts to the router; and a processor configured to process information in the messages, generate receipts and control the plurality of communication interfaces, the processor being configured to control an interface of the plurality of communication interface to send the receipts to the router via a communication channel independent of the one or more network capabilities.

According to an additional aspect of the present disclosure, there is provided an apparatus in a network for routing instructions for remotely controlling a plurality of nodes in a network, the apparatus comprising: at least one processor; and a computer-readable medium coupled to the at least one processor having instructions stored thereon which, when executed by the at least one processor, causes the at least one processor to: process a received request with instructions for controlling a plurality of nodes in the network; generate one or more messages associated with the instructions for transmitting to one or more network capabilities for the one or more network capabilities to forward the instructions to one or more message handlers for controlling the plurality of nodes; include in the one or more messages at least one receipt generation optimiser parameter for managing traffic generated by transmission of receipts to the one or more messages from one or more message handlers; cause the one or more messages to be sent to the selected network capabilities; and receive one or more receipts associated with the instructions transmitted in accordance with the at least one receipt generation optimiser parameter.

According to a further aspect of the present disclosure, there is provided an apparatus in a network for handling instructions to control a plurality of nodes in a network, the apparatus comprising: at least one processor; and a computer-readable medium coupled to the at least one processor having instructions stored thereon which, when executed by the at least one processor, causes the at least one processor to: process one or more received messages comprising instructions for controlling the one or more nodes, the instructions having been routed, via a network capability, from a router for routing instructions to the plurality of nodes; control one or more modes in accordance with the instructions; generate a receipt to the one or more messages in accordance with a receipt generation optimiser parameter in the one or more messages; and cause the receipt to be sent to the router.

### BRIEF DESCRIPTION OF THE DRAWINGS

Aspects of the invention may best be understood by reference to the following description of certain exemplary embodiments together with the accompanying drawings in which:
Figure 1 is a schematic diagram of a system for remotely controlling a plurality of nodes in the system;
Figure 2 is a schematic diagram of a router in the system;
Figure 3 is a schematic diagram of data and instructions stored in memory of the router;
Figure 4 is a schematic diagram of a message handler in the system;
Figure 5 schematically illustrates the format of a customer request received by the router for controlling remote devices in the system;
Figure 6 schematically illustrates the format of a message transmitted by the router for routing instructions for controlling remote devices in the system;
Figure 7 is a process flow diagram for a method in the router of routing instructions for controlling remote devices in the system;
Figure 8 is a process flow diagram for generating a message transmission plan;
Figure 9 is a process flow diagram for segmenting instructions;
Figure 10a is a schematic diagram of a transmission plan stored in memory of the router and Figure 10b is a schematic diagram illustrating how instructions may be sent over a number of messages;
Figure 11 is a process flow diagram for a method in the message handler of receiving and executing instructions for controlling devices local to the message handler;
Figure 12 is a process flow diagram for a method in the message handler of generating and sending a receipt;
Figure 13 schematically illustrates the format of a receipt transmitted by the message handler;
Figure 14 is a process flow diagram for a method in the router of sending a receipt summary;
Figure 15 is a process flow diagram for receiving a telecontrol message via Digital Audio Broadcasting (DAB);
Figure 16 is a process flow diagram for receiving a telecontrol message using Frequency Modulation (FM) broadcast technology; and
Figure 17 is a process flow diagram for receiving a telecontrol message using Short Message Service (SMS) cell broadcast technology.

### DETAILED DESCRIPTION

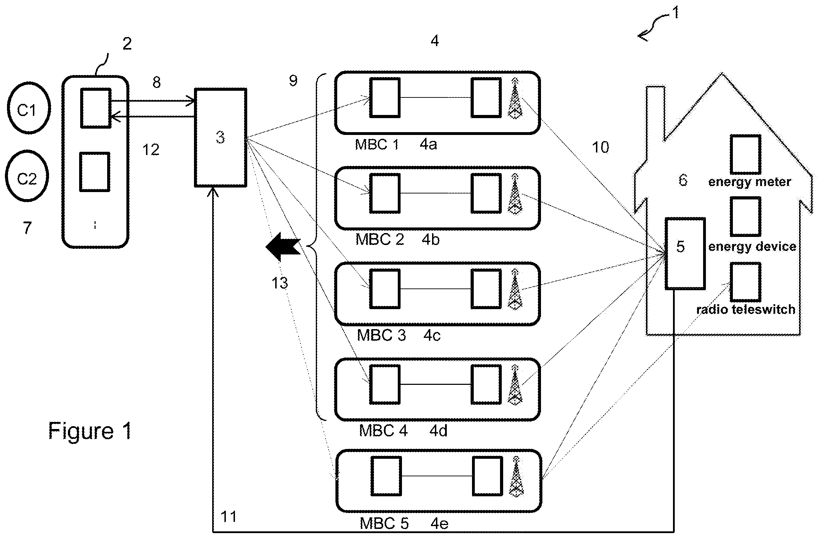

With reference to Figure 1, a system 1 for remotely controlling a plurality of target nodes is provided in the form of a network comprising one or more remote requesting devices 2, a network router 3, a plurality of message broadcast capabilities (MBC) 4, a message handler 5 and a plurality of target nodes 6.

Customers C1, C2 7 in a remote location generate and send requests 8 for controlling the nodes 6 using their requesting devices 2. The network router 3 receives the requests and generates MBC request messages 9, based on the information in the requests 8, which are then sent to the MBCs 4. The MBCs 4 generate control messages 10 based on the MBC request messages 9 and send the control messages 10 to the message handlers 5. The message handlers 5, in turn, control the target nodes 6. The customer 7 may for example be a utility company, such as an energy aggregator, energy distribution network or energy supplier. The nodes 6 may for example be an energy or other utility device such as a utility meter, a generator, a heater, boiler or a charger. More specifically, it may be a night storage heater, an immersion heater or a charging point for an electric vehicle. As shown in Figure 1, in some embodiments, a feedback channel is provided between the message handler 5 and the router 3 and the message handler 5 may transmit a receipt 11 to the router 3 in response to the received control message 9. The feedback channel may be independent of the MBCs 4, as shown in Figure 1. Typically, the message handler 5, together with the nodes 6 controlled by the message handler, are located at premises belonging to the customer. Alternatively, the message handler 5 and the nodes 6 are located at the premises of another party but the customer still owns the nodes or, at least, has some control over them. The router may transmit a receipt summary 12, based on received receipts 11, to the requesting devices 2. As shown in Figure 1, the MBCs may also send status updates 13 to the router 3. The router 3 may make a decision about which MBC 4 to use for the transmission of a message based on the status updates 13.

The system 1 may comprise MBCs 4 that are capable of sending messages using different types of communication technologies. For example, messages 10 may be broadcast using different technologies including, but not limited to, digital audio broadcast (DAB) technology, frequency modulation (FM) radio signal technology and short message service (SMS) broadcast technology. Messages may also be broadcast over a low frequency transmission channel provided by, for example, an existing national broadcast transmission network. A national broadcast transmission network may be a broadcast transmission network at least partly controlled or supported by the state and covering at least a substantial part of the country using regional broadcast stations, such as the BBC broadcast network in the UK. It would typically transmit in low frequency channels, with frequencies lower than 1 MHz, e.g. around 200kHz. In the UK it may for example be the national teleswitch network. The MBCs may also comprise more than one MBC using the same type of transmission media but, for example, servicing different message handlers 5.

In the specific example of Figure 1, the MBCs comprise two DAB MBCs, 4a, 4b, operated by a DAB operator, each servicing different regions. The first MBC 4a services a first and a second region and the second MBC 4b services a third region, as indicated in Figure 1. The system of Figure 1 further includes an MBC 4c operated by an FM operator, an MBC 4d operated by a SMS cell broadcast operator and a national teleswitch MBC 4e operated by a national broadcast transmission network. The system of Figure 1 therefore allows the router to forward instructions over four different types of terrestrial communication networks. The router 3 routes the instructions to an appropriate MBC 4a, 4b, 4c, 4d, 4e for the MBC to broadcast control messages 10 to the message handlers 5. In existing teleswitch networks the teleswitch MBCs may broadcast messages that can be received directly by a teleswitch at the customer's premises, indicated by the dashed line in Figure 1. If the system comprises an existing national teleswitch MBC, the message handler 5 may be configured to receive and decode the national teleswitch network messages. Alternatively, in some implementations, the system may be configured to let the existing teleswitches receive the messages from the existing teleswitch MBC. It will be appreciated that although Figure 1 shows an MBC 4e for broadcasting message over an existing national teleswitch network, in some embodiments, the system may not have access to an existing national broadcast transmission network.

Each of the MBCs may comprise one or more message assemblers and one or more transmitter in communication with the one or more message assembler. When an MBC is configured to broadcast messages, the one or more transmitter may for example be a broadcast transmitter or a plurality of broadcast transmitters covering a specific region. The transmitters may be DAB, FM, cellular or other radio signal transmitters. The one or more message assembler assemble the messages and forward them to the one or more transmitters for transmitting. The one or more message assemblers may comprise one or more data processing devices such as servers or other computing devices configured to execute software for assembling the messages.

It will be realised that although the network messaging capabilities 4 are referred to herein as 'message broadcast capabilities', the system is not limited to transmitting messages by broadcast. The messages could also be communicated using unicast or multicast transmission technologies. The messages may be transmitted over a communication network allowing communication between a single sender and a single receiver. Alternatively, or additionally, the messages may be transmitted over a network allowing communication between a single sender and a defined set of receivers. The networks may be two-way communication networks. Messages may for example be transmitted to one or more specific message handlers 5 over a cellular network, via the internet or via fixed broadband connections such as digital subscriber line (DSL) or cable access. Although the terms 'message broadcast capability', 'MBC' or 'broadcasting' in relation to the messages will be used below to describe various embodiments it should be understood, unless the context makes it clear otherwise, that the messages in the system may be sent to the message handlers 5 via any network messaging capability able to forward the messages from the router to the message handler 5 using any type of suitable messaging technology and the system may also comprise messaging capabilities that support unicast and/or multicast communication.

The requesting devices may be a server, conventional computer, a laptop, a tablet, a smart phone or any other electronic device from which messages can be sent.

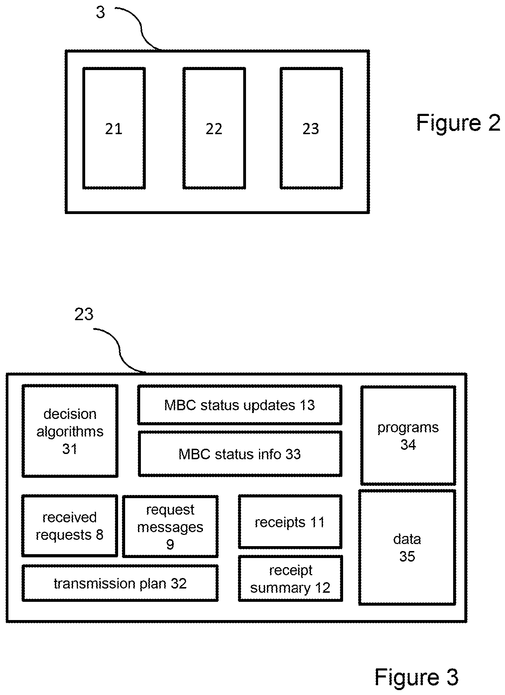

The router 3 will now be described in more detail with respect to Figures 2 and 3. The router is an electronic data processing apparatus comprising a communication interface 21, a processor 22 and a memory 23. The electronic data processing apparatus may for example comprise one or more servers. The processor 22 and the memory 23 may comprise one or more processors and memory modules distributed over the one or more servers. In some implementations, the router may comprise a managed service running on a server. The communication interface may comprise an interface for accessing a communication network, for example including the internet, for communicating with the customer devices 2, sending request messages 9 and for receiving receipts 11 and MBC status updates 13. The access may for example be via a fixed broadband connection such as DSL or cable access, via a connection to a data centre for example over a T1 or Ethernet connection, or via another connection suitable for communicating with other electronic devices. The interface 21 may therefore comprise software or a combination of hardware and software.

The communication interface 21 may comprise a handler for network Application Programming Interface (API) requests coming from the customer devices 2. It may for example support hypertext transfer protocol (HTTP) representational state transfer (REST) APIs or simple object access protocol (SOAP) web services. The communication interface may comprise one or more API handlers to receive requests 8 and send receipt summaries 12 to the customer devices 2. The one or more API handlers may further be used to send request message 9 to the MBCs and to receive status updates from the MBCs. The method to submit messages would be under the control of the operator of the MBC but the MBCs could for example also provide a REST API or SOAP web service for submission and the communication interface could subscribe to that web service to submit the messages. The communication interface 21 may subscribe to a different REST API or SOAP web service at the MBCs to achieve the push of status update events from the MBC. The one or more API handlers may also receive the receipts from the message handlers. In some embodiments, the communication interface 21 may communicate with another electronic data processing and communication apparatus that receives the receipts and forwards the receipts to the router. For example, another device may comprise a cellular receiver for receiving receipts sent by SMS from the message handlers, if SMS is a method available to the message handlers for sending receipts, and may then forward the receipt information to the communication interface 21. Alternatively, the communication interface 21 may comprise the cellular receiver.

The communication 21 interface receives a request 8 from a requesting device 2. The processor 22 generates one or more MBC request messages 9 based on the information in the request. The processor may also include additional data in the request messages 9. The processor 22 then instructs the communication interface 21 to send the message 9 to one or more MBCs 4 for broadcasting for receipt by the relevant message handlers 5. As mentioned above, if the network capability supports communication via unicast or multicast channels, the network capability may alternatively send the message only to the relevant message handlers. Moreover, if the system comprises an MBC configured to broadcast directly to a radio teleswitch node, the processor 22 may additionally or alternatively cause the communication interface 21 to send the message to that MBC for broadcasting for receipt by the radio teleswitch node. A decision on which MBC to forward the message to is made based on data and algorithms stored in memory 23. The router may at a later time receive a receipt from at least some of the message handlers that received the message. The receipts are received via the communication interface 21 and processed by the processor 22. The processor may generate a receipt summary 12 based on the receipts and send it via the communication interface 21 to the customer devices 2.The router would typically also comprise a user interface (not shown in Figure 2) for allowing a user to control and query the router. However, user interaction is not required for sending MBC request messages 9 to the MBCs based on received requests, receiving receipts and status updates and sending receipt summaries. The processor automatically generates and sends the messages to the appropriate MBCs.

Figure 3 is a schematic view of the data stored in memory 23 in the router 3. The memory of the router stores algorithms 31 for deciding to which MBC to forward instructions. The memory also stores the received requests 8 from the requesting devices 2 and request messages 9 to be sent to the MBCs together with a transmission plan 32 of how and when to send the request messages 9. Additionally, the memory comprises an area for storing the received status updates 13 from the MBCs. The memory may also store processed status information 33 including a list of regions, the MBCs that support each region, the anticipated speed of transmission by the MBC in that region, the cost of transmission for that region and the maximum segment size for transmission. The status data may for example be stored as a table in the memory. The cost of transmission may for example be stored as a price per MB per region. The processor 21 of the router 3 will consider the information in the requests 8 and the MBC status information 33 and, using the decision algorithms 31, make a decision about how to generate the messages and where to send them. The processor 21 also makes a decision about when to send a specific message based on the information in the request 8 and the decision algorithms 31 in memory 23.

With reference to Figure 3, the memory 23 may also comprise an area for storing receipts 11 from the message handlers. Additionally, it may comprise a memory area for storing receipt summaries 12 to be sent to the requesting devices.

Additionally, the memory 23 further stores computer programs 34 comprising instructions for operating the router and receiving, generating and sending messages. The programs 34 comprise the operating system software that is accessed by the processor 21 to control the router. The programs 34 can invoke the decision algorithm 31 to determine to which MBCs to send a message and when to send the message. They can also handle requests 8 from the customer devices 2 and receipts 11 from the message handlers 5. At least one of the one or more processors 21 of the router and at least some of the programs 34 therefor make up a message processing module for handling messages including requests 8, request messages 9, receipts 11, summary receipts 12 and MBC status updates 13. The processor 21 executes the instructions in the programs to route instructions for the nodes and to process and generate messages. The memory also stores additional data 35 for operating the router. For example, the data may comprise settings and address data.

The term 'memory' has been used in the description of the router to indicate any type of memory or data storage. It will be realised that the memory can be implemented using a combination of cache memory, random access memory (RAM), a hard disk or any other combination of volatile and non-volatile memory or data storage. For example, some information in memory described with respect to Figure 3 may be stored on a hard disk and then loaded into RAM when the router 3 is started.

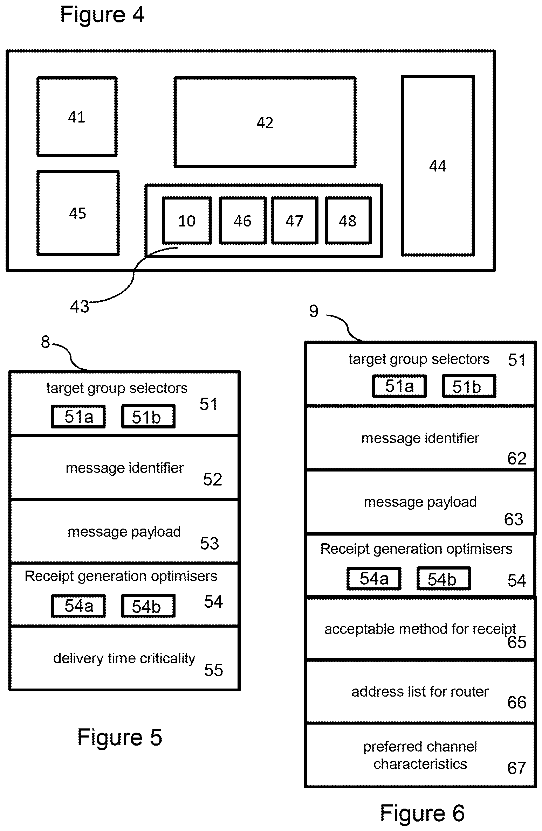

The message handler 5 will now be described in more detail with respect to Figure 4. With reference to Figure 4, the message handler is an electronic data processing apparatus comprising an MBC communication interface 41, a processor 42, a memory 43 and an interface 44 for communicating with, and controlling, the target nodes 6. The message handler may also comprise an additional communication interface 45 for communicating with the router 3 via a communication channel that is independent of the MBCs. In other words, the message handler 5 may be configured to communicate directly with the router without sending messages via the MBCs. The memory 43 is arranged to store received control messages 10, information 46 about the nodes 6 to which the message handler is connected and other data 47 including, but not limited to, settings, time stamps, receipts 11, and information about the channels to tune into to receive control messages 10. The memory also stores computer programs 48 comprising instructions for operating the message handler. For example, the computer programs may comprise an operating system for operating the message handler and instructions and algorithms invoked by the operating system to handle messages and receipts. The computer programs may also comprise instructions for controlling the nodes. The processor 42 executes the instructions in the programs to control the communication interfaces 41, 44, 45, process control messages, handle instructions for the nodes and generate messages.

The MBC communication interface 41 may comprise more than one receiver or interface configured to receive message from the MBCs. In some embodiments, the receivers are configured to receive messages communicated over at least two different types of transmission media. The receivers monitor broadcast, unicast or multicast channels using different types of communication technologies and the processor 41 can then detect control messages 10 when they are sent in the channels. As a specific example the MBC communication interface may comprise a DAB/FM receiver and a cellular receiver. The message handler may then be able to receive control messages over four different types of transmission media, for example DAB, FM, SMS cellular broadcast and a low frequency radio signal transmission medium of a national broadcast transmission network, as shown in Figure 1.

The target node interface 44 may for example comprise a Bluetooth transceiver, a ZigBee transceiver, a device language message specification / companion specification for energy metering (DLMS/COSEM) over high-level data link control (HDLC) transceiver, a Wi-Fi transceiver or any other suitable short-range communication interface. The processor 42 processes messages according to programs and algorithms in memory 43 and carries out the instructions in the messages by, for example, sending messages via the target node interface 44. The target nodes 6 would have a corresponding communication interface for receiving the instructions from the message handler 5 for the instructions to be executed by a processing unit of the target node 6. In some embodiments, instead of sending messages to target nodes, the target interface 44 may comprise means for mechanically switching a node device on or off or adjusting the settings of the node device.

In some embodiments, the message handler 5 is able to send receipts to the router 3. The message handler 5 may generate the receipt based on instructions stored in memory 43 and information in the received control messages 10 and send the receipts 11 via the interface 45 for communicating with the router 3. The interface 45 may be arranged to send the receipts via a communication path that is independent of the MBCs. The interface may for example comprise a cellular or Wi-Fi transceiver for sending the receipts directly to the router via a network.

In some embodiments, a single transceiver may provide the function of at least two of the node interface 44, the router interface 45 and part of the MBC communication interface 41. For example, a cellular chip may provide both the function of a receiver for receiving a broadcast message from an MBC and a transmitter for transmitting a receipt to the router 45. Moreover, a Wi-Fi chip may provide an interface to both the nodes and the router. It may also provide an interface for receiving the control messages 10. For example, the message handler may comprise a DAB/FM chip for receiving DAB and FM broadcast messages, a cellular chip for receiving broadcast, unicast and/or multicast messages and communicating with the router and a Wi-Fi chip or Bluetooth chip for providing an alternative communication path, via a network, to the router and for communicating with the nodes. In other embodiments, separate chips are provided for each of the node interface 44, router interface 45 and MBC communication interface 41. In some embodiments at least some of the interfaces may comprise a combination of hardware and software for monitoring the communication channels and receiving and transmitting messages.

The message handler 5 may also comprise a user interface (not shown in Figure 4) for allowing a user to control the message handler 5. However, it will be realised that the message handler does not require any user input to handle the control messages 10, control the nodes 6 and send receipts 11. The messages are automatically processed and the message handler automatically controls the nodes and generates and sends receipts in accordance with the instructions in the message. The user interface may be used by a user to provision the message handler about which broadcast and/or unicast and/or multicast channels to tune into, reflecting the channels that the owner of the node, controlled by the message handler, has decided to use. It may also be used to provision the message handler with information about the nodes which it controls. The provisioning may be carried out off-line. The information about the nodes and which channels to tune into is stored in the memory 43.

The term 'memory' in the description of the message handler 5 has been used to indicate any type of memory or data storage. It will be realised that the memory can be implemented using a combination of cache memory, RAM, a hard disk or any other combination of volatile and non-volatile memory or data storage. For example, some information in the memory 43 described with respect to Figure 4 may be stored on a hard disk and then loaded into RAM when the message handler is booted up.

The information included in a request 8 from a requesting device 2 according to some embodiments is shown schematically in Figure 5. The request comprises target group selectors 51, a message identifier 52, a message payload 53, receipt generation optimisers 54 and a delivery time criticality parameter 55. The request 8 may also comprise additional information not shown in Figure 5.

The target group selectors 51 may comprise one or more parameters 51 a indicating the target location of nodes 6 to be controlled. Alternatively, or additionally, it may also comprise one or more parameters 51 b indicating one or more target classes of nodes to be controlled. For example, a target location parameter 51 a could be data indicating a postcode area or a Geographic Information System (GIS) representation. The target group selectors 51 may allow a requesting device to include a set of target locations, e.g. a set of postcodes, for increased flexibility. The router 3 is configured to use the target location parameter to choose the most appropriate MBC or MBCs 4 for delivery of a control message 10. A target class parameter 51b may include data indicating for example the owner of a node, the type of a node or the category of a node. For example, the owner may be a particular utility company. The type and category may indicate different characteristics of the node device. The type may for example include, but is not limited to, 'heaters', 'meters' or 'chargers'. The category may indicate a capability of the nodes, e.g. 'a switchable load, 10-50kW'. In some cases, the target class can embody a combination of factors. For example a value may represent 'switchable load, 10-50kW, managed by Utility A'. The value of the parameter may be a code that represent different factors or combination of factors and a look-up table with the codes and the characteristics they relate to may be provided. The look-up table may be stored by at least the customer devices 2 and the message handlers 5. The message handlers 5 store the target group selector parameters 51 a, 51 b for each of the nodes which they are configured to control as part of the data about the nodes 46 in memory 43. The message handler 5 can be configured to use the target group selector parameters to decide whether the received message is relevant for the nodes it controls. By including target group selectors in the requests 8, appropriate MBCs can be selected for the instructions and messages can be generated and broadcast such that the instructions are subsequently acted on by a subset of a customer's nodes. This may improve the transmission efficiency and granularity of control offered to the customer.

The message identifier 52 includes an identification number for the set of instructions in the payload. The message payload 53 comprises the actual instructions for controlling the target node. The instructions may for example comprise a command, such as a command to adjust, turn on or switch off. The instructions may be encrypted. For example, the instructions may be encrypted by the customer such that it can only be decrypted by the message handlers or nodes that are associated with the customer.

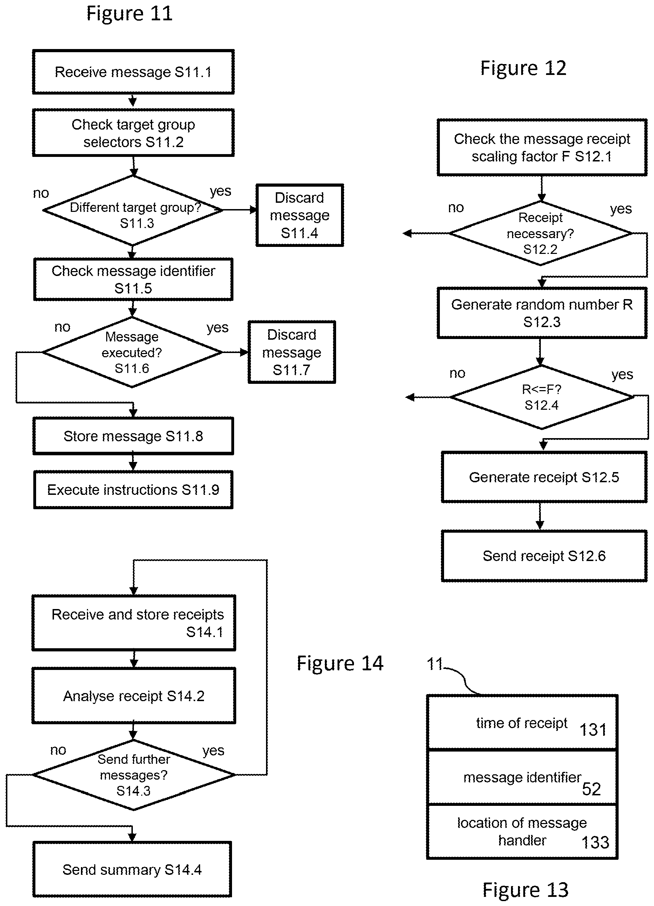

The receipt generation optimisers 54 may comprise a message receipt scaling factor parameter 54a. Alternatively, or additionally, it may comprise a message receipt window parameter 54b. The message receipt scaling factor parameter 54a indicates the proportion of message handlers 5 from which a message receipt 11 is desired. In some implementations, the parameter may be an integer number between 0 and 100, with a value of 0 indicating that message receipts are not required from any message handlers and a value of 100 indicating that message receipts are required from all message handlers. However, it will be appreciated that other implementations are possible. The generation of message receipts according to the message receipt scaling factor parameter will be described in more detail with respect to Figure 12. The message receipt window 54b parameter specifies the time window during which delivery receipts can be spread. For example, if the customer requires urgent confirmation that the instructions in the payload 53 have been executed, the message receipt window may specify a relative short time. If confirmation is less urgent, the message receipt window may specify a relatively longer time. The parameter may for example comprise a value which specifies a number of seconds.

The delivery time criticality parameter 55 indicates the level of urgency with which the router 3 will need to ensure that the instructions are delivered to the target nodes. For example, the delivery time criticality parameter may specify a time period in milliseconds. The delivery time criticality parameter 55 may be used by the router 3 to choose the most appropriate MBC or MBCs for delivering the instructions in the payload 53.

The information in an MBC request message 9 according to some embodiments is shown in Figure 6. The message comprises the target group selectors 51, a message identifier 62, a message payload 63 comprising instructions, the receipt generation optimisers 54, a parameter indicating acceptable methods for message receipts 65, an address list for the router 66 and preferred channel characteristics 67. The request message 9 may also comprise additional information not shown in Figure 6.

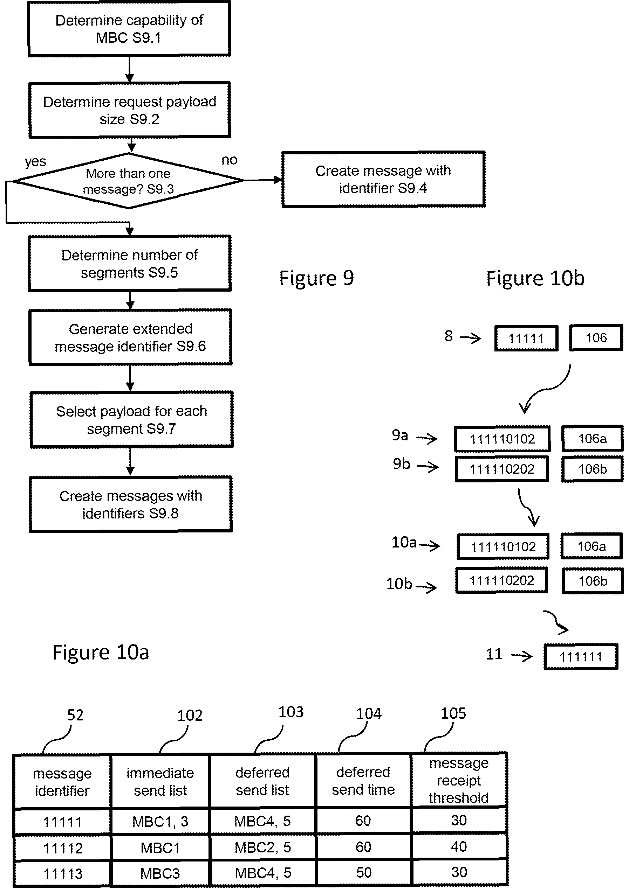

The target group selectors 51 and the receipt generation optimisers 54 of the MBC request message 9 may be copied from the target group selectors and the receipt generation optimisers of the request 8 described with respect to Figure 5. The target group selectors may comprise a target location parameter 51 a and a target class parameter 51 b and the receipt generation optimisers 54 may comprise a message receipt scaling factor parameter 54a and a message receipt window parameter 54b as described with respect to Figure 5. The message identifier 62 and message payload 63 are based on the message identifier 52 and payload 53 in the request 8 described with respect to Figure 5. However, in some implementations, the message identifier 62 of the MBC request message 9 may be an extended message identifier and the payload 63 may only comprise a segment of the payload 53 of the request 8. For example, if the router 3 decides that it would be appropriate to send a set of instructions in a request 8 as a plurality of segments, wherein each segment is transmitted in a separate message, the message identifier 62 may comprise the message identifier 52 of the request 8 plus information linking the message with the other messages that comprise the other segments of the set of instructions. A method of generating a plurality of MBC request messages 9 based on a single request 8 will be described in more detail with respect to Figure 9.

The parameter 65 indicating acceptable methods for message receipts may comprise data indicating different types of communication technologies or networks that can be used by the message handler 5 to send receipts 11 to the router 3. For example, the parameter may comprise the value "SMS" indicating that receipts can be sent via SMS or the value "NB-IOT" indicating that receipts can be sent via a narrowband Internet of Things (loT) network provider. In some embodiments, the parameter may comprise more than one value indicating that more than one messaging technology can be used by the message handler 5 to deliver a receipt 11.

The address list 66 may comprise a list of addresses for the router, with at least one address for each acceptable communication method indicated in the message. For example, the list could comprise the values "SMS=(e.164 address); "NB-IOT=(IPv4 address)" where '(e.164 address)' and '(IPv4 address)' indicate the addresses of the router using the e.164 international public telecommunication numbering plan and Internet Protocol version 4 (IPv4) respectively. In this example, the list could additionally or alternatively also comprise the Internet Protocol version 6 (IPv6) address.

The preferred channel characteristics 67 may comprise a value that indicates to the receiving MBC the preferred type of data channel to be used for transmission. For example, it may include a value corresponding to 'low latency preferred' or 'high data rate preferred'. This may be useful if a particular MBC has a number of available data channels with differing characteristics.

The information in a control message 10, according to some embodiments, comprises all the parameters and instructions 51, 62, 63, 54, 65, 66 described with respect to the request message 9 in Figure 6 except the preferred channel characteristics 67. The MBCs would remove the preferred channel characteristics once the appropriate channel has been selected, in dependence on the preferred channel characteristics, if more than one channel is available. The router may not always know if an MBC can transmit control messages in more than one communication channel but may include the preferred channel characteristics in case more than one channel is available. The MBC may also leave out some of the information in the message requests 9 and/or include additional information when it assembles control messages 10, to be sent to the message handlers, from the request messages 9 received.

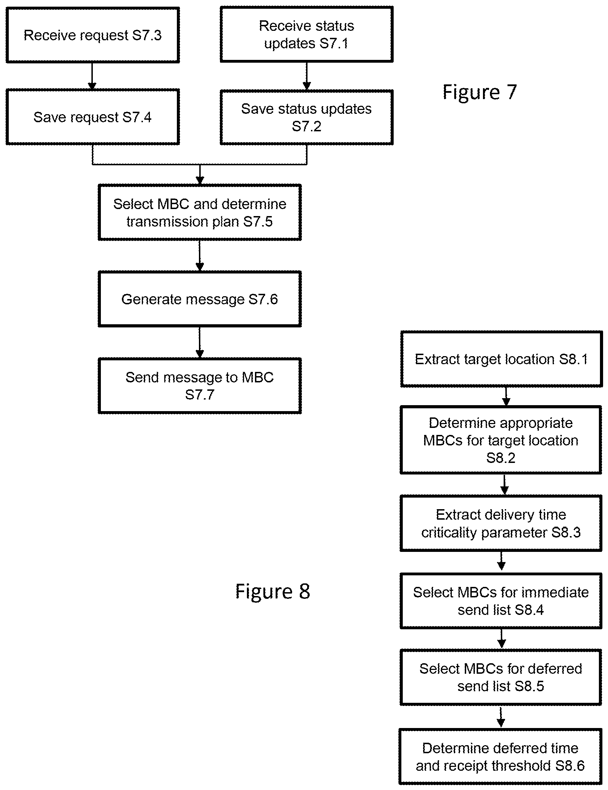

The operation of the router 3 will now be described in more detail with respect to Figures 7, 8 and 9. With reference to Figure 7, the router receives status updates 13 from the MBCs at step S7.1 and saves the status updates in memory 23 at step S7.2. A status update 13 from an MBC may comprise a list of regions supported for broadcast by the MBC, the anticipated speed of transmission per region and a maximum segment size for transmission. The status update may also comprise the cost of transmission per region, for example provided as a price per MB. The processor 22 may process the information and include the information in the processed status information 33 in memory 23. In some implementations, the information is pulled by the router 3 from the MBCs 4. For example, the information may be pulled by the router at regular intervals. In other implementations the information is pushed to the router 3 by the MBC on an event basis. For example, it may be pushed when there is a change in the cost or speed of transmission of the MBC. In some implementations the communication interface 21 of the router subscribes to a web service exposed by the MBC with web sockets to achieve the push of events from the MBC 4 to the router 3. The router repeats steps S7.1 and S7.2 for each MBC and for each status update received.

At step S7.3 the router receives a request 8 from a requesting device 2. The processor 22 of the router saves the request 8 in memory 23 at step S7.4. It then invokes the decision algorithms 31 to determine a transmission plan for where and when to send an MBC request message 9 at step S7.5. Using a decision algorithm 31, the processor 22 selects one or more MBCs 4 to which it will send the request message 9 and determines a time when it will send the message to the one or more MBCs. In some implementations it determines (a) an 'immediate send list' and (b) a 'deferred send list'. The immediate send list includes MBCs to which the message will be sent immediately. The deferred send list includes MBCs to which the message may be sent at a later time. The method of selecting MBCs will be described in more detail with respect to Figure 8.

The processor 22 then generates an MBC request message 9 at step S7.6. The processor generates a message identifier 62 and a message payload 63 based on the message identifier 52 and message payload 53 of the request and includes these in the new message. The processor also includes the target group selectors 51 and the receipt generation optimisers 54 from the request 8 in the new message. The processor also includes an acceptable method for sending receipts 65 and the address of the router 66, to which the message handler can send receipts using the acceptable method. Furthermore, the processor includes an indication of preferred channel characteristics, which may later be used if an MBC has more than one channel. The message may be generated as a message to be pushed to the MBC via the internet or any other suitable transmission medium. The method to submit messages is under the control of the operator of the MBC, for example they could provide a REST API or SOAP web service for submission. For some MBCs, the payload 63 may be too large to send in a single message. Consequently, the router may divide the message into a number of smaller messages as will be described with respect to Figure 9. At step S7.7, the processor 22 then causes the one or more messages to be transmitted to the MBCs, via the communication interface 21, according to the transmission plan 32 determined at step S7.5. In some situations, this may involve sending a message simultaneously to a number of MBCs. In other situations, the messages may be sent sequentially to a number of MBCs. In yet other situations, the message may be sent simultaneously to a number of MBCs and then at a later time sent to one or more MBCs if the number of receipts received are not above a threshold. Typically, as indicated above, a message assembler entity within the MBC receives and deals with the messages. The message assembler entity may extract the relevant information from the received request messages 9, generate the control messages 10 and broadcast the generated control messages. The message assembler entity may check the preferred channel characteristics and broadcast control messages in a channel selected accordingly.

A method of selecting a number of MBCs 4 and determining a transmission plan 32 will now be described with respect to Figure 8. The processor 22 of the router extracts the target location parameter 51 a from the target group selectors 51 in the request 8 at step S8.1. The processor 22 then accesses the processed MBC status information 33 and identifies which MBCs are able to broadcast messages to the target location at step S8.2. The processor 22 then generates an 'immediate send list' and a 'deferred send list' and includes one or more of the identified MBCs on the immediate send list and one or more of the identified MBCs on the deferred send list. The immediate send list is a list of MBCs to which the one or more request messages 9 to be generated from the request will be sent immediately or as soon as the system allows. The deferred send list is a list of MBCs to which the one or more request messages 9 to be generated from the request will be sent after a certain time if the number of message receipts from the message handlers is below a certain threshold. In more detail, the processor extracts the delivery time criticality parameter 55 from the received request 8 at step S8.3 and based on this data and the MBC status information 33 in memory the processor selects, using the decision algorithm 31, which one or more of the identified MBCs to include on the immediate send list at step S8.4 and which one or more of the identified MBCs to include on the deferred send list at step S8.5. For example, if the delivery time criticality parameter 55 has a very low value, the router may choose more than one MBC with a very low latency to include on the immediate send list. The processor 22 may also select preferred channel characteristics to include in the request message 9 based on the information in the request 8 and the decision algorithms 31 stored in memory 23.

The processor then determines at step S8.6, using the decision algorithms 31, a suitable receipt threshold and the time at which to send the message to the MBCs on the deferred send list if the number of receipts received is below the threshold. The same receipt threshold and deferred send time may be applied to all MBCs on the deferred send list. The message receipt threshold may be selected based on the receipt scaling factor 54a of the receipt generation optimisers 54 in the request 8. The receipt threshold and deferred send time may additionally or alternatively be selected on a per customer basis. That way the router can vary the quality of service experienced by the customers, for example in relation to the cost incurred by each customer. The immediate send list, the deferred send list, the receipt threshold and the deferred send time are stored in, and forms part of, the transmission plan 32 in memory. As a specific example, the router may choose to simultaneously send a time-critical MBC request message 9 to the national broadcast transmission network 4e and the DAB transmission operator for region 1 and 2, 4a. If after 60 seconds, message receipts have been received from less than 50% of the message handlers, the router may send the MBC request message 9 to a SMS cell broadcast network operator 4d for broadcasting by SMS as well.

The process for generating messages and message identifiers will now be described in more detail with respect to Figure 9. The processor 22 of the router accesses the status information 33 for a particular MBC either on the immediate send list or the deferred send list at step S9.1 and determines the capability of the MBC. At step S9.2, the processor 22 then determines the size of the payload 53 of the request 8 based on which it will generate one or more request messages 9. If the processor determines at step S9.3 that the size of the payload 53 is smaller than the maximum payload size the MBC can handle in a single message, the processor creates a single request message 9 at step S9.4, with the instructions from the request and a message identifier 62 equal to the message identifier 52 from the request 8 or extended with information to indicate that the full set of instructions is included in one message. If, conversely, the processor 22 determines at step S9.3 that the payload size is greater than the maximum payload size the MBC can handle, the processor determines how many segments the message will need to be broken into at step S9.5. The processor then extends the message identifier 52 from the request 8 with the segment number of the segment of the message payload 53 being transmitted and the total number of segments used to convey the overall message payload at step S9.6. The processor then chooses a message payload 63, comprising a segment of the instructions of the payload 53 of the request, for each segment message at step S9.7 and creates the messages 9 at step S9.8. The router then repeats the step for the next MBC on the immediate send list or deferred send list.

In some implementations, to reduce the amount of processing, the processor may analyse all the MBCs on the immediate and deferred send lists at step S9.1 and group them into similar capabilities so that the steps of Figure 9 are only repeated once for each group of MBCs with similar capability. If the system has two MBCs that require segmentation but the MBCs can support different maximum payload sizes, a different message segmentation may be generated for each MBC. For example, one MBC may have maximum message size of 100 bytes and another MBC may have a maximum message size of 150 bytes. That might lead to different number of message segments being generated from the request for each MBC. The message handler 5 can find and group segments provided by broadcast control messages 10 with extended message identifiers 62 that start with the same message identifier 52, taken from the associated request 8, and specify the same total number of segments.

Figure 10a schematically illustrates an example of how a transmission plan 32 may be organised and stored in memory 23. The table of Figure 10a includes the original message identifiers 52, from the associated requests 8, for a number of different set of instructions and the immediate send list 102, the deferred send list 103, the deferred send time 104 and the message receipt threshold 105 for the set of instructions. The first column indicates the original message identifier 52. The table of Figure 10a stores transmission plan data for instructions with identifiers 11111, 11112 and 11113. A different table or data area in the memory 23 will store the associated segment information and extended message identifiers for the request messages used to convey the instructions. The immediate send list 102 and the deferred send list 103 are indicated in the second and third column respectively. Moreover, the deferred send time 104 and the message receipt threshold 105 are indicated in column 4 and column 5 respectively. In the example of Figure 10a, two different MBCs, MBC1 and MBC3, are included on the immediate send list and two other MBCs, MBC4 and MBC5, are included on the deferred send list for the instructions with identifier 11111. The transmission plan indicates that if after 60 seconds, message receipts have only been received from fewer than 30% of the message handlers, the message will be resent to MBC4 and MBC5. Figure 10a shows different examples of immediate send lists, deferred send lists, deferred send times and receipt thresholds for the instructions associated with message identifier 11112 and 111113.

If the maximum message size of one or more of the MBCs is smaller than the message size that would be required to broadcast the full instructions associated with message identifier 11111, the instructions may be segmented as schematically illustrated with respect to Figure 10b. The request 8 with the full instructions 106 is used by the router to generate two segmented request messages 9a and 9b with instruction segments 106a and 106b respectively which in turn are used by one or more MBCs to generate two control messages 10a and 10b, again comprising the instruction segments 106a and 106b respectively. The message handler then generates a single receipt 11 for the instructions. Other message handlers may generate their own receipts 11 for the same instructions and with the same identifier. The extended message identifiers 62 for the request messages 9a and 9b comprise the original message identifier 11111 from the associated request, the segment number and the total number of segments. As is clear from Figure 10b, the two digits after the original message identifier indicates the segment number, in this case '01' or '02', and the last two digits indicate the total number of segments of the instructions, in this case '02'. It will be realised that a different segmentation may be required for different MBCs and for other MBCs more than two segments may be required. Moreover, for some MBCs no segmentation may be required. The full instructions 106 would then be included in a single request message 9 and a single control message 10. Moreover, it will be realised that in practice a longer message identifier 52 than shown in Figures 10a and 10b may be required. It will be appreciated that Figure 10b is schematic and, for clarity, does not show all the information included in the request 8, the request messages 9a, 9b, the control messages 10a, 10b and the receipt 11.

It will be appreciated by the skilled person that there are a number of possible implementations for the transmission plan and the plan shown in Figure 10a is only one example. It will also be appreciated that although Figure 10a shows that the MBCs on the deferred list are different to the MBCs on the immediate send list, some of the MBCs on the immediate send list may also be on the deferred send list.

The handling of messages and receipts will now be described in more detail with respect to Figure 11, 12 and 13. With reference to Figure 11, the one or more receivers of the MBC communication interface 41 of the message handler receives a control message at step S11.1 and the processor 42 then reads the message. The message handler can be provisioned to tune in to specific channels, reflecting the channels that the company owning the message handler has decided to use. The message handler may tune in to specific channels based on data 47 in memory 43. Once tuned into the specific message channels, it scans the channels to find control messages 10. If the control message is encrypted and not meant for the message handler, the message handler will not be able to read the message and may discard it before reading it. Consequently, by being able to decrypt a message, the message handler may determine that it may be the intended recipient.

If the receiver and processor can receive and decode the message, the processor extracts parts of the message for analysis. The processor checks the target group selectors 51 of the message at step S11.2 to determine whether the message is in fact relevant for the message handler. For example, the target class parameter 51 b of the target group selectors 51 may indicate that the instructions in the message applies to all electric heaters associated with a particular electricity company and the instructions may indicate that they should be switched off. Alternatively, the target class parameter may indicate that the instructions apply to electric car charging stations and the instructions include a command to switch them on. The processor 42 compares the target class parameter 51 b in the message with the data 46, stored in memory 43, indicating the classes of the nodes which it is able to control at step S11.3 and determines if it needs to act on the message. The information 46 in the memory 43 may include information indicating the owner, the type and category of devices to which it is connected or at least with which it is able to communicate. If the broadcast channel covers more than one region the processor 42 may also check the target location parameter 51a of the target group selectors 51 to determine if the instructions in the message are for the region in which the message handler is located. Again, the data 46 in memory 43 may include the location of the message handler and the nodes. If the target class 51 b in the message is different to the target class of all the nodes, the message is discarded at step S11.4. Similarly, if the target location 51 a is different to the location of the message handler and the nodes, the message is also discarded. If the comparison at step S11.3 indicates that the target group selectors match the stored information about the nodes, for example because a target class parameter match one of the stored classes for the nodes, the processor determines that the instructions are relevant for one or more of the nodes.

The processor 42 then checks the message identifier at step S11.5 and determines whether the message has already been received via a different communication channel at step S11.6. It may also check whether the message is a segment message and if it therefore will need to look out for further messages, and/or add the instructions in the message to instruction segments of already received messages, to obtain the entire instructions. If the message has already been received and executed, it discards the message at step S11.7. If the message has not been received, it logs the message and the time of receipt in memory 43 at step S11.8. Steps S11.1 to S11.3, S11.5, S11.6 and S11.8 are then repeated for any control messages that include associated instruction segments. When the message handler has received the entire set of instructions, the processor 42 executes the instructions in the message at step S11.9. For example, it may instruct a device connected to it to perform an operation as encoded in the payload in the received message or messages, such as activation of a switch within a utility meter to change that meter's tariff from tariff A to tariff B or activation of a switch to turn on a generator. After it has executed the instructions it may discard the message but keep an indication in memory 43 that the message has been received and executed. Execution of instructions in telecontrol or telemetry messages are known and will not be described in detail herein. As indicated above, executing the instructions may include sending an instruction via a wireless or wired connection to an energy or other utility device to adjust itself, turn on or switch off. It may alternatively include operating a mechanical switch.

It will be appreciated that the order of the steps of the processes described herein may be changed. For example, in Figure 11, the processor of the message handler may check the message identifier before it checks the target group selectors so that it does not have to check the location and class of the nodes at step S11.2 and S11.3 if the message has already been received and executed. By having a message identifier, the message handler can avoid executing the same command, broadcast in alternative channels, multiple times. Moreover, in some implementations, only the payload may be encrypted and the message handler may carry out steps S11.2, S11.3, S11.5 and S11.6 before it attempts to decrypt the payload.

A method of sending message receipts 11 will now be described with respect to Figure 12. For segmented messages, the message handler 5 only sends a receipt, to acknowledge receipt of instructions, once all the segments of the instructions are received. Moreover, in some implementations, only one receipt is sent even if the message handler has executed the instructions on multiple nodes. The processor 42 extracts the receipt generation optimisers 54 from the control message 10 stored in memory 43 and checks the message receipt scaling factor 54a at step S12.1. The message receipt scaling factor may indicate that no receipts are necessary, in which case the message handler determines that a receipt is not required at step S12.2 and ends the process. For example, a scaling factor with the value '0' may indicate that message receipts are not necessary. If the scaling factor has a value that indicates that it may be required to acknowledge receipt, the processor determines that it may need to send a receipt at step S12.2 and proceeds to step S12.3 and to generate a random number. If the random number R is found to be smaller or equal to the message scaling factor F at step S12.4, the processor generates a receipt at step S12.5. To indicate that a message receipt may be necessary, the scaling factor may be given a value corresponding to a number between 1 and 100 and the processor may generate a random number between 1 and 100. Different message handlers can generate random numbers in different ways but, as an example, the processor of the message handler could create a random number based on a hash of the time of receipt of the message and the manufacturer serial number of the message handler. If, for example, the scaling factor is set to 30, approximately 30% of the message handlers should generate a random number equal to or lower than 30, especially if the population of message handlers to which the instructions apply is large, and the router should therefore, if the transmission of the control message was successful, receive receipts from approximately 30% of the relevant message handlers. Of course, the exact percentage will depend on the population of message handlers that receive and act on the control message.

The receipt 11 is then sent at step S12.6 during the message receipt window 54b indicated in the receipt generator optimiser parameters 54. The message handler may extract the acceptable methods for receipt 65 and the address list 66 for the router and send the receipt to one of the addresses on the list using the corresponding acceptable method. In some implementations, the message handler may have the capability to send the message using more than one of the acceptable methods, in which case it may select one of them. For example, the message handler may both have a cellular chip and be connected to broadband via, for example, a Wi-Fi connection. By only asking for receipts from a portion of the handlers, receipts are generated for sufficient cases to inform the customer of the outcome without causing traffic spikes. Moreover, the message handler can spread the message generation and transmission of receipt over the time window, further reducing the likelihood of traffic spikes.

An example of the information in a receipt 11 is shown in Figure 13. The receipt of Figure 13 includes the time of receipt 131 of the message, the message identifier 52 and the location of the message handler 133. Since only one receipt is sent even if the instructions are segmented, the message identifier in the receipt is the unextended message identifier 52 corresponding to the message identifier in the request 8. The location area of the message handler may be provisioned at the message handler by the customer, for example using a graphical user interface, and stored as part of the information about the nodes 46 in memory 43. The time of receipt and the location area of the message handler are extracted from the memory 43 and included in the receipt.

The handling of receipts in the router 3 will now be described with reference to Figure 14. The router receives the message receipts 11 and stores them in memory at step S14.1. At the end of a time period corresponding to the deferred send time 104 in the transmission plan 32, the processor 22 then analyses the receipts at step S14.2. It may count the number of receipts and it may also calculate the percentage of receipts based on the number of target message handlers and/or nodes. If the number of receipts is lower than the message receipt threshold, the router may decide at step S14.3 to resend the instructions via the MBCs on the deferred send list 103 and the process then returns to receiving and storing incoming receipts. Alternatively, if the number of message receipts for a message is equal to or above the threshold, the processor of the router generates a summary of the receipts and causes the summary to be sent, via the communication interface 21, to a relevant customer device 2 at step S14.4. The summary receipt may take the form of the number of message receipts received per location area. If the router had to resend the message via the MBCs on the deferred list, the processor will again analyse the receipts at the end of a time period based on the receipt window 54b. If the router has already sent the message via the MBCs on the deferred list, the processor 22 may determine at step S14.3 that no further messages are to be sent and cause a summary of the receipts to be sent at step S14.4 even if the threshold has not been met. Alternatively, it may decide to resend the message again and wait until the receipt threshold has been met before it sends a summary to the customer device.

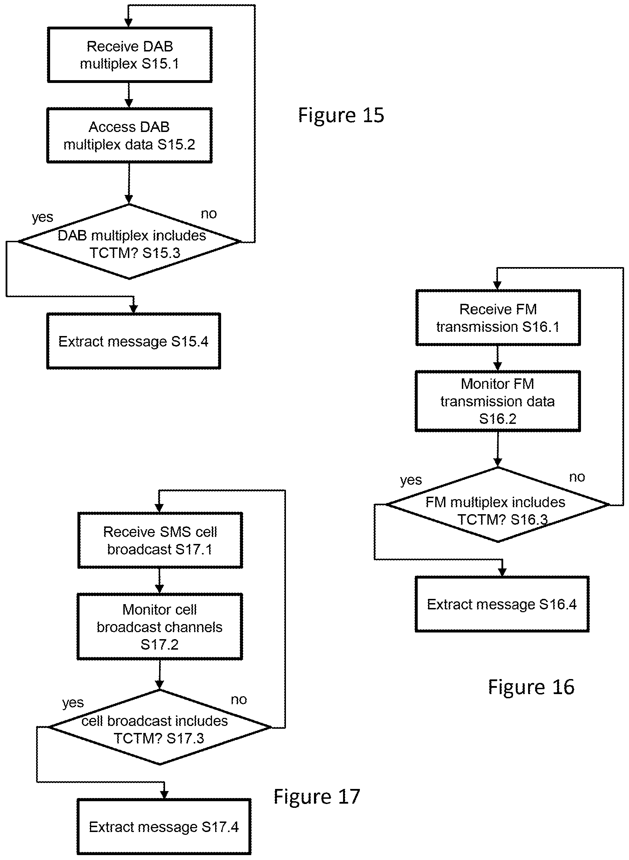

By having a number of different types of message communication technologies available, via the MBCs 4, the router can choose one or more appropriate technologies. Mechanisms for transmitting control messages over DAB, FM and SMS cell broadcast will now be described with respect to Figures 15, 16 and 17. The control messages 10 will be referred to as time-critical telecontrol messages (TCTM) and the message handler 5 as a telecontrol message handler (TMH). It will be realised that the term 'telecontrol' is meant to be interpreted broadly and to indicate control of remote nodes, but the messages could also be used to communicate other information than control commands and the mechanisms may also be appropriate for 'telemetry' systems and time-critical telemetry messages.

Mechanism for broadcasting messages over a DAB transmission network and procedures in the TMH 5 for detecting and reading messages transmitted over a DAB transmission network will first be described. The structure of DAB multiplexes are known by the skilled person and will not be described herein in detail. References will be given to the relevant sections and parameters described in the standards documents ETSI EN 300 401 (2006-01) "Radio Broadcasting Systems; Digital Audio Broadcasting (DAB) to mobile, portable and fixed receivers" (referred to as 'ref[1]' hereinafter) and ETSI TS 101 756 (2014-05) "Digital Audio Broadcasting (DAB) Registered Tables" (referred to as 'ref[2]' hereinafter).

A mechanism is required for carrying the TCTM 10 over the available data channels in DAB and for the TMH 5 to be able to identify the TCTM in the broadcast DAB multiplex. With reference to Figure 15, the communication interface 41 of the TMH receives a DAB multiplex at step S15.1. The communication interface 41 of the TMH 5, in the implementations in which the TMH can receive messages over a DAB communication medium, comprises a DAB receiver for receiving the DAB multiplex. The processor 42 of the TMH then accesses specific multiplex data, in the received multiplex, indicating whether a TCTM 10 can be found in the multiplex at step S15.2 and determines whether the data comprises a TCTM at step S15.3. If it determines that the multiplex contains a TCTM, the processor of the TMH 5 then extracts the TCTM at step S15.4. A number of different mechanism for achieving the method of Figure 15 are provided as will be described below.

The DAB main service channel (MSC) provides two methods to transfer user data, namely the stream mode sub-channel and the packet mode sub-channel. However, in known systems it is not possible to transfer TCTMs in the main service channel because a receiver is unable to determine whether the received multiplex signal contains TCTMs and where within the multiplex they are located. In some implementations of the system of Figure 1, a dedicated value to represent TCTMs is allocated to the 'Data service component type' parameter (table 2 in ref[2]) and a procedure is introduced in the TMH to detect it. In this method, the processor 42 of the TMH will read the Multiplex Configuration Information (MCI) for a DAB multiplex at step S15.2 to determine how the service and service components are organised. This can be achieved by the TMH reading the 'FIG Type 0 - Extension 2 field, FIG 0/2' (Figure 24 in ref[1]), where 'FIG' corresponds to the 'Fast Information Group'. If the Transport Mechanism = 1 (MSC stream data) and the Data Service Component equals a value representing TCTM, the TMH determines at step S15.3 that the service component is a stream mode sub-channel containing a TCTM data and can decode the TCTM at step S15.4. Alternatively, if the Transport Mechanism = 3 (MSC packet data) and the Data Service Component equals a value representing TCTM, the TMH determines at step S15.3 that the service component is a packet mode sub-channel containing TCTM data and can decode it accordingly at step S15.4.

In other implementations of the TMH 5, the TMH can receive TCTMs in the Fast Information Data Channel (FIDC) of a DAB multiplex. The DAB FIDC provides a channel to transfer user data but in known systems it is not possible to use the channel to transfer TCTMs because a receiver is unable to determine whether the received multiplex signal contains TCTM traffic and if so where it is located. In some of the implementations of Figure 1, a mechanism for transmitting TCTM using DAB is provided in which a new value to indicate TCTM traffic is allocated to the 'FIDC identifier'. This can be done using a dedicated 'Extension' value, for example Extension 3, of the FIG Type 5 data field (Figure 7 in ref[1]). A procedure is introduced in the TMH to detect the new value. Again, the processor 42 of the TMH would read the MCI for the received DAB multiplex at step S15.2, but in this implementation it would then check the value of the Transport Mechanism and the FIDC identifier. If the Transport Mechanism = 3 (FIDC) and the FIDC identifier equals a value representing TCTMs, the TMH determines at step S15.3 that the service component is a FIDC containing TCTM data and can decode it accordingly at step S15.4.

Yet other alternative implementations involve transferring TCTMs using the programme associated data (PAD) of a DAB multiplex. The DAB PAD provides a channel to transfer user data, associated with an audio channel, but in known DAB networks it is not possible to successfully transfer TCTMs in the PAD because a receiver is unable to determine which PAD data represents TCTMs. In implementations of the system of Figure 1, a new value to indicate TCTM traffic is allocated to the 'Application Type' (Table 27 in ref[1]) in the extended PAD (X-PAD) field associated with the audio stream (section 7.4.2 in ref[1]). The TMH receives the DAB multiplex containing audio streams and, at step S15.2, the processor reads the X-PAD field associated with the audio stream. The TMH then locates the 'Application type' indicator, either by scanning the entire X-PAD field or by examining the Contents Indicator if present (Figure 40, Figure 41 in ref[1]). If the application type value represents TCTMs, the TMH knows that the X-PAD data contains TCTM data and can decode it accordingly. The receiver in the message handler then seeks a DAB channel with an audio stream containing the corresponding 'Application type' to receive the TCTM.

In yet other implementations, the location of the TCTMs can be signalled using DAB 'user application information'. It can be time-consuming for a processor to locate TCTMs within a DAB multiplex, especially those located within audio streams. In these implementations, a new value to indicate TCTM traffic is allocated to the 'User Application Type' (Table 16 in ref[2]). In these implementations, the processor of the TMH reads the Service Information field for a DAB multiplex at step S15.2, to search for 'User application information' which if present will be located in the 'FIG Type 0 - Extension 13' field (Figure 68 in ref[1]). If the value of 'User application type' within this field indicates TCTM traffic, the TMH can determine at step S15.3 that the TCTM data is located in the channel pointed to by the 'Service Identifier' (Sid) and the 'Service Component Id within the Service' (SCIdS) parameters. Both of these are included within the 'User application Information' field where the User application type was detected.

A mechanism for transmitting TCTMs via an FM transmission network will now be described. By including MBCs that can broadcast messages using FM radio signal technology in the system of Figure 1 and introducing a procedure in the TMH 5 for detecting and reading a message transmitted over a FM broadcast network, the router 3 will have further options for routing a time-critical message to the TMHs. The Radio Data System (RDS) and the DAta Radio Channel (DARC) provide channels to transfer user data, associated with an FM broadcast. However, in known systems it is not possible to transfer TCTMs in FM broadcasts because a receiver is unable to determine where the TCTM is located within the FM broadcast. The structures of FM broadcast data and channels are known by the skilled person and will not be described herein in detail. References will be given to the relevant sections and parameters described in the standards documents CENELEC EN 50067:97 "Specification of the radio data system (RDS) for VHF/FM sound broadcasting in the frequency range from 87,5 to 108,0MHz" (referred to as 'ref[3]' hereinafter) and ETSI EN 300 751 (2003-01) "Radio broadcasting systems; DAta Radio Channel (DARC); System for wireless infotainment forwarding and teledistribution" (referred to as 'ref[4]' hereinafter).

In some embodiments of the system of Figure 1, a set of methods for carrying the TCTMs over the available FM data channels, including RDS and DARC, and for the TMH to be able to identify the TCTMs in the FM transmission are provided. With reference to Figure 16, the communication interface of the TMH receives a FM transmission at step S16.1. The processor of the TMH controls the communication interface to monitor a specific group or channel of the transmission at step S16.2, as will be described in more detail below, determines that the transmission includes a TCTM at step S16.3 and then determines the location of the message and accesses the message at step S16.4.

In some implementations of the system of Figure 1, the TCTM can be sent via the RDS Open Data Application Channel. In these implementations the communication interface 41 of the TMH 5 comprises an RDS receiver. Moreover, a dedicated value is allocated to the 'Applications Identification Code' (AID) parameter (see section 3.1.4 in ref[3]) to indicate TCTM traffic. At step S16.2, the processor 42 controls the RDS receiver to monitor the Type 3A Group (see Section 3.1.5.4 in ref[3]). If an AID value representing TCTM traffic is found, the corresponding Type 3A group will indicate in which Groups the TCTM traffic will be found. The processor 42 of the TMH 5 can then extract the message at step S16.4.

In other implementations, the TCTM can be sent via the DARC channel. In those implementations, the communication interface of the message handler comprises a DARC receiver. A dedicated value representing TCTM traffic is allocated to the Service Identity (SID) parameter (see ref[4]). At step 16.2, the processor 42 controls the DARC receiver to monitor the DARC service channel (SeCh) to retrieve information about the multiplex organisation (see section 8.3 in ref[4]). If a Service Identity value is found representing TCTM traffic, the processor of the TMH can then determine at step S16.3 that the FM broadcast includes a TCTM and identify from the SeCh the address and characteristics of the TCTM service within the multiplex such that it can access the message at step S16.4.

A mechanism for transmitting TCTMs via SMS cell broadcast will now be described. By including MBCs in the network of Figure 1 that can transmit via SMS cell broadcast and introducing a procedure in the TMH for reading a message transmitted over SMS broadcast, the router will have further options for routing a time-critical message to the TMHs. The structure of SMS cell broadcast data is known by the skilled person and will not be described herein in detail. References will be given to the relevant sections and parameters described in the standards document 3GPP TS 23.041 V2.0.0 "Technical realization of Cell Broadcast Service" (referred to as 'ref[5]' hereinafter).

In some embodiments of the system of Figure 1, a mechanism for carrying the TCTMs over the available SMS cell broadcast channels and for the TMHs to be able to identify the TCTM in a multiplex of cell broadcast messages are provided. With reference to Figure 17, the communication interface 41 of the TMH receives a cell broadcast at step S17.1 and monitors the cell broadcast channels for all the supported radio accesses in step S17.2. This may cover one or more of Global System for Mobile Communications (GSM), Universal Mobile Telecommunications Service (UMTS) and Long Term Evolution (LTE) radio accesses. The communication interface 41 of the TMH in these embodiments includes a suitable receiver for monitoring the cell broadcast channels used to send TCTMs. The processor 42 of the TMH then determines at step S17.3 whether the broadcast includes a TCTM message and, if it does, reads the message at step S17.4. To realise communication of TCTMs over the SMS cell broadcast communication medium, a dedicated value representing TCTMs is allocated to the 'Message Identifier' parameter (see section 9.2.1 in ref[5]]). The TMH checks the Subscriber Identity Module (SIM) file 'EFcbmi', corresponding to the 'Elementary file, cell broadcast message identifier selection'. The file includes a set of 'message identifier' values. If a value is found representing the new value for TCTM traffic, then the processor of the TMH determines at step S17.3 that the multiplex of cell broadcast messages includes a TCTM message. The processor then checks the cell broadcast schedule message to find where the TCTM message is located within the multiplex, for that 'message identifier' value, and extracts the message at step S17.4.

Various mechanisms for indicating the existence of TCTMs in the broadcasts and procedures for detecting the dedicated values representing TCTMs have been described above. The receivers may be configured using software stored as part of the computer programs 48 in memory 43 and settings stored as part of the data 47 in memory 43, described with respect to Figure 4, in order to detect the dedicated values and access the TCTMs. The processor 42 may execute software to control the receivers to monitor the relevant channels, to check the relevant data structures and values and to extract the messages. The dedicated values for indicating the presence of TCTMs may be stored in the data 47 in memory 43 and the processor 42 may compare the values in the received DAB, FM or SMS cell broadcast multiplexes with the values stored in the memory 43 to determine whether the received broadcasts include TCTMs.

As mentioned with respect to Figure 1, the router may be able to route instructions to an MBC that is able to transmit messages over a national broadcast transmission network, such as the national teleswitch transmission network in the UK. It is known how TCTM messages can be transmitted over national broadcast transmission networks, and then used to control target nodes, and this will not be described herein.

A number of different implementations of transmitting messages via DAB, FM and SMS cell broadcast have been described and it will be realised that any implementation for transmitting a message via DAB, FM or SMS cell broadcast can be combined with an implementation for transmitting a message via any of the other of DAB, FM and SMS cell broadcast described above. The various implementations can also be combined with implementations in which a message handler is also able to receive messages over a national broadcast transmission network. Moreover, in some embodiments, the various implementations may be combined with transmitting messages using unicast or multicast technology, for example, using a cellular network or via a fixed broadband internet connection. The system may comprise one or more separate network unicast capabilities for forwarding messages from the router to the message handlers. In some embodiments, the router may also be operable to send messages directly to the message handlers, using a unicast transmission channel, as an alternative to sending messages to MBCs or separate message unicast capabilities. However, in other embodiments in which time critical messages are required to be sent to tens of millions of devices, broadcasting the messages using one or more MBCs may be the most appropriate method.

Although a number of specific components of the network of Figure 1 has been described herein it will be appreciated that the network can also comprise additional components. A network implementing the mechanisms described herein may comprise a very large number of message handlers and nodes, each message handler controlling multiple nodes. In some embodiments, a message handler and a node may be located in the same housing and be part of the same device. In other embodiments, the message handlers may be separate devices from the nodes to be controlled. Specific components of the router and the message handlers have been described but it will be realised that the router and the message handler can be implemented in other ways. For example, a message processing module of the router may be implemented only in software or only in hardware. Moreover, the message handler may comprise a number of separate devices or all components may be included in a single device. The processor of the message handler may comprise one or more processing units in the message handler.

It will be appreciated that the order of the steps in the processes described with respect to Figures 7, 8, 9, 11, 12, 14, 15, 16 and 17 can be varied and a different order than that described may be contemplated for some embodiments. Moreover, some steps may be carried out in parallel with other steps by different parts or modules of the apparatus in which the process is carried out and once the processes and steps have been carried out for a particular request, status update, message, receipt or broadcast data, they may be repeated for other requests, status updates, messages, receipts and broadcasts data.

Various applications for the system have been described herein but it will be appreciated that other applications are possible. For example, distribution networks need to balance demand and supply to make sure the quality and security of supply of utilities across the area they service and the system described herein can be used to ensure demand and supply are balanced. The frequency of a distribution network is controlled by real-time or near real-time balance between demand and supply and the frequency various continuously. As a specific example, the system described herein can be used in Frequency Response and Firm Frequency Response services to control the frequency. Moreover, it will be appreciated that the system can also have applications not concerned with the supply of utilities.

The description of the various aspects and embodiments of the present invention has been presented for purposes of illustration and description, but is not intended to be exhaustive or to limit the invention to the forms disclosed. A number of alternatives and optional features have been described and it will be appreciated that any optional feature or alternative may be combined with any other optional features and alternatives described and the disclosure includes the various combinations and configurations of optional features and alternatives. It will be understood that the scope of the present invention is defined by the appended claims and not limited to the particular examples and embodiments disclosed.

## Claims

1. Apparatus (3) in a network for routing instructions for remotely controlling a plurality of nodes (6) in the network, the apparatus comprising:
a communication interface (21) configured to: receive a request (8) comprising instructions for controlling a plurality of nodes; communicate with one or more network capabilities (4) such that each of the one or more network capabilities sends messages using a respective communications technology to one or more message handlers (5) that are configured to interface with and thereby control the plurality of nodes; and receive receipts from the one or more message handlers; and
a message processing module (22) configured to: generate one or more messages (9), based on the instructions in the received request and further comprising at least one receipt generation optimiser parameter, the at least one receipt generation optimiser parameter being for managing traffic generated by transmission of receipts (11), the receipts acknowledging receipt of the instructions at the one or more message handlers; and cause the one or more generated messages to be transmitted to the one or more network capabilities via the communication interface.

2. Apparatus according to claim 1, wherein the at least one receipt generation optimiser parameter comprises a parameter that indicates the proportion of message handlers (5) from which a receipt to the one or more messages is required.

3. Apparatus according to claim 2, wherein the at least one receipt generation optimiser parameter has a value that comprises a number between a low number, indicating that no message handlers (5) are required to send receipts, and a high number, indicating that all message handlers that act on the instructions are required to send receipts.

4. Apparatus according to claim 1, 2 or 3 wherein:
the at least one receipt generation optimiser parameter comprises a parameter (54b) that indicates a time window within which a message handler (5) is required to send a receipt if a receipt is required; and/or
the message processing module (22) is further configured to include an indication (65) of an acceptable method of sending receipts in the one or more messages; and/or
the communication interface (21) is configured to receive the receipts from the one or more message handlers via a communication channel independent of the one or more network capabilities (4); and/or
the message processing module (22) is further configured to include an address (66) of the apparatus (3) in the one or more messages to which receipts are to be sent; and/or
the receipt comprises at least one out of a time of receipt (131) of the one or more messages by the message handler, the location (133) of the message handler and an identifier (52) for the instructions; and/or
the message processing module (22) is further operable to generate a receipt summary (S14.4) based on received receipts to the one or more messages and cause the receipt summary to be sent to a customer associated with the request comprising the instructions.

5. Apparatus according to claim 4, wherein the message processing module (22) is further configured to include an indication in the one or more messages of an acceptable method of sending receipts and wherein the indication of an acceptable method of sending receipts comprises an indication that messages are required to be sent via one of short message service or a narrowband internet of things network.

6. Apparatus according to any preceding claim, wherein the plurality of nodes (6) comprise at least one out of a meter, heater, generator and charger.

7. Message handler apparatus (5) in a network for controlling one or more of a plurality of nodes (6) in the network, the message handler apparatus comprising:
a plurality of communication interfaces (41, 44), configured to:
receive messages (10) from one or more network capabilities (4) with instructions for controlling one or more nodes, the instructions having been routed by a router (3) to the one or more network capabilities for forwarding to the message handler using a respective communications technology;
interface with the one or more nodes to carry out instructions in the messages on the nodes thereby; and send message receipts to the router; and
a processor (42) configured to:
process information in the messages and control the plurality of communication interfaces, wherein the processor is operable to generate a receipt (11) in response to receiving a message in accordance with at least one receipt generation optimiser parameter in the message, wherein the receipt acknowledges receipt of the instructions at the message handler (5); and
control a communication interface (41) of the plurality of communication interfaces to send the receipt to the router.

8. Message handler apparatus according to claim 7, wherein the at least one receipt generation optimiser parameter comprises a scaling factor parameter that indicates the proportion of message handlers from which a receipt to the one or more messages is desired.

9. Message handler apparatus according to claim 8, wherein the scaling factor parameter has a value that comprises a number between a low number, indicating that no receipt is required, and a high number, indicating that a receipt is required.

10. Message handler apparatus according to claim 8 or 9, wherein the processor is operable to generate a random number and generate the receipt if the random number is equal to or lower than the value of the scaling factor parameter;.

11. Message handler apparatus according to any one of claims 7 to 10, wherein:
the at least one receipt generation optimiser parameter comprises an indication of receipt time window within which the message handler is required to send a receipt, if a receipt is required, and the processor (42) is configured to control the communication interface to send the receipt within the receipt time window; and/or
the message (10) comprises an indication of an acceptable messaging method for sending the receipt (11) and wherein the processor (42) is configured to select an interface (41), of the plurality of communication interfaces, that supports the acceptable messaging method in order to send the receipt; and/or
the processor (42) is configured to control an interface (41) of the plurality of communication interfaces to send the receipt (11) via a channel independent of the network capabilities; and/or
the processor (42) is configured to send the receipt (11) to an address of the router indicated in the one or more messages; and/or
the one or more messages (10) comprises a plurality of messages, each comprising a segment of the instructions and a message identifier comprising an identifier for the instructions and an identifier for the segment of the plurality of segments in the message and wherein the processor is operable to send a receipt (11) once all the segments have been received and include the identifier for the instructions in the receipt; and/or
the processor (42) is configured to include a time of receipt of the one or more messages and a location of the message handler in the receipt (11).

12. A method of handling instructions for remotely controlling a plurality of nodes (6) in a network, the method comprising:
processing a received request (8) with instructions for controlling a plurality of nodes (6) in the network;
generating one or more messages associated with the instructions for transmitting to one or more network capabilities (4), such that each of the one or more network capabilities forwards the instructions using a respective communications technology to one or more message handlers that are configured to interface with and thereby control the plurality of nodes;
including in the one or more messages at least one receipt generation optimiser parameter;
causing the one or more messages to be sent to the selected network capabilities; and
receiving one or more receipts (11), associated with the instructions, wherein the one or more receipts acknowledge receipt of the instructions, the one or more receipts transmitted in accordance with the at least one receipt generation optimiser parameter.

13. A method of acknowledging receipts of instructions to control one or more nodes of a plurality of nodes (6) in a network, the method comprising:
processing one or more received messages (10) comprising instructions for controlling the one or more nodes, the one or more messages being received, via a network capability (4), from a router (3) for routing instructions to the plurality of nodes;
controlling one or more nodes in accordance with the instructions;
generating a receipt (11) to the one or more messages in accordance with a receipt generation optimiser parameter in the one or more messages, wherein the receipt acknowledges receipt of the instructions; and
causing the receipt to be sent to the router.

14. A computer program, configured when operated by a processor to perform all the steps of the method of claim 12 or claim 13.

15. Message handler apparatus (5) in a network for controlling one or more of a plurality of nodes (6) in the network, the message handler apparatus comprising:
a plurality of communication interfaces (41, 42) configured to:
receive messages (10) from one or more network capabilities (4) with instructions for controlling one or more nodes, the instructions having been routed by a router (3) to the one or more network capabilities for forwarding to the message handler using a respective communications technology;
interface with the one or more nodes to carry out instructions in the messages on the nodes thereby; and send message receipts to the router; and
a processor (42) configured to process information in the messages, generate receipts (11), wherein the receipts acknowledge receipt of the instructions, and control the plurality of communication interfaces, the processor being configured to control an interface (41) of the plurality of communication interfaces to send the receipt to the router via a communication channel independent of the one or more network capabilities.

## Patentansprüche

1. Vorrichtung (3) in einem Netzwerk für die Weiterleitung von Anweisungen zur Fernsteuerung einer Vielzahl von Knoten (6) in dem Netzwerk, wobei die Vorrichtung Folgendes umfasst:
eine Kommunikationsschnittstelle (21), so konfiguriert, dass: eine Anfrage (8) umfassend Anweisungen zur Steuerung einer Vielzahl von Knoten empfangen wird; mit einer oder mehreren Netzwerkfunktionen (4) kommuniziert wird, derart, dass jede der einen oder der mehreren Netzwerkfunktionen Nachrichten mittels einer jeweiligen Kommunikationstechnologie an einen oder mehrere Nachrichten-Handler (5) sendet, die so konfiguriert sind, dass sie als Schnittstelle zu der Vielzahl von Knoten dienen und sie dadurch steuern; und dass Empfangsbestätigungen von dem einen oder den mehreren Nachrichten-Handlern empfangen werden; und
ein Nachrichtenverarbeitungsmodul (22), so konfiguriert, dass: eine oder mehrere Nachrichten (9) erzeugt werden, die auf den Anweisungen in der empfangenen Anfrage basieren und weiter mindestens einen Optimierungsparameter für die Empfangsbestätigungserzeugung umfassen, wobei der mindestens eine Optimierungsparameter für die Empfangsbestätigungserzeugung zur Handhabung von Verkehr dient, der im Rahmen der Übermittlung von Empfangsbestätigungen (11) erzeugt wird, wobei die Empfangsbestätigungen den Empfang der Anweisungen an dem einen oder den mehreren Nachrichten-Handlern bestätigen; und dass veranlasst wird, dass die eine oder die mehreren erzeugten Nachrichten über die Kommunikationsschnittstelle an die eine oder die mehreren Netzwerkfunktionen übermittelt werden.

2. Vorrichtung nach Anspruch 1, wobei der mindestens eine Optimierungsparameter für die Empfangsbestätigungserzeugung einen Parameter umfasst, der den Anteil von Nachrichten-Handlern (5) angibt, von denen eine Empfangsbestätigung für die eine oder die mehreren Nachrichten erforderlich ist.

3. Vorrichtung nach Anspruch 2, wobei der mindestens eine Optimierungsparameter für die Empfangsbestätigungserzeugung einen Wert aufweist, der eine Zahl zwischen einer niedrigen Zahl umfasst, die angibt, dass keine Nachrichten-Handler (5) zum Senden von Empfangsbestätigungen erforderlich sind, und einer hohen Zahl, die angibt, dass alle den Anweisungen folgenden Nachrichten-Handler Empfangsbestätigungen senden müssen.

4. Vorrichtung nach Anspruch 1, 2 oder 3, wobei:
der mindestens eine Optimierungsparameter für die Empfangsbestätigungserzeugung einen Parameter (54b) mit der Angabe eines Zeitfensters umfasst, innerhalb dessen ein Nachrichten-Handler (5) eine Empfangsbestätigung senden muss, sofern eine Empfangsbestätigung erforderlich ist; und/oder
das Nachrichtenverarbeitungsmodul (22) weiter so konfiguriert ist, dass eine Angabe (65) eines annehmbaren Verfahrens zum Senden von Empfangsbestätigungen in der einen oder den mehreren Nachrichten enthalten ist; und/oder
die Kommunikationsschnittstelle (21) so konfiguriert ist, dass die Empfangsbestätigungen von dem einen oder den mehreren Nachrichten-Handlern über einen von der einen oder den mehreren Netzwerkfunktionen (4) unabhängigen Kommunikationskanal empfangen werden; und/oder
das Nachrichtenverarbeitungsmodul (22) weiter so konfiguriert ist, dass in der einen oder den mehreren Nachrichten eine Adresse (66) der Vorrichtung (3) enthalten ist, an die Empfangsbestätigungen gesendet werden sollen; und/oder
die Empfangsbestätigung mindestens eine Uhrzeit des Empfangs (131) der einen oder der mehreren Nachrichten durch den Nachrichten-Handler, die Position (133) des Nachrichten-Handlers und/oder eine Kennung (52) für die Anweisungen umfasst; und/oder
das Nachrichtenverarbeitungsmodul (22) weiter so betreibbar ist, dass eine Empfangsbestätigungsübersicht (S 14.4) basierend auf den empfangenen Empfangsbestätigungen für die eine oder die mehreren Nachrichten erzeugt wird und veranlasst wird, dass die Empfangsbestätigungsübersicht an einen Kunden gesendet wird, welcher der Anfrage umfassend die Anweisungen zugeordnet ist.

5. Vorrichtung nach Anspruch 4, wobei das Nachrichtenverarbeitungsmodul (22) weiter so konfiguriert ist, dass eine Angabe zu einem annehmbaren Verfahren zum Senden von Empfangsbestätigungen in der einen oder den mehreren Nachrichten enthalten ist und wobei die Angabe eines annehmbaren Verfahrens zum Senden von Empfangsbestätigungen eine Angabe umfasst, dass Nachrichten über einen eines Kurznachrichtendienstes oder eines schmalbandigen Internet-der-Dinge-Netzwerks gesendet werden müssen.

6. Vorrichtung nach einem vorhergehenden Anspruch, wobei die Vielzahl von Knoten (6) mindestens ein Messgerät, eine Heizvorrichtung, einen Generator und/oder eine Ladevorrichtung umfasst.

7. Nachrichten-Handler-Vorrichtung (5) in einem Netzwerk zur Steuerung eines oder mehrerer aus einer Vielzahl von Knoten (6) in dem Netzwerk, wobei die Nachrichten-Handler-Vorrichtung Folgendes umfasst:
eine Vielzahl von Kommunikationsschnittstellen (41, 44), so konfiguriert, dass:
Nachrichten (10) mit Anweisungen zur Steuerung eines oder mehrerer Knoten von einer oder mehreren Netzwerkfunktionen (4) empfangen werden, wobei die Anweisungen von einem Router (3) an die eine oder die mehreren Netzwerkfunktionen zur Weiterleitung an den Nachrichten-Handler mittels einer jeweiligen Kommunikationstechnologie weitergeleitet wurden;
sie als Schnittstelle zu dem einen oder den mehreren Knoten dienen, um dadurch Anweisungen in den Nachrichten auf den Knoten auszuführen; und dass Nachrichtenempfangsbestätigungen an den Router gesendet werden; und
eine Verarbeitungseinheit (42), so konfiguriert, dass:
Informationen in den Nachrichten verarbeitet werden, und die Vielzahl von Kommunikationsschnittstellen gesteuert wird, wobei die Verarbeitungseinheit so betreibbar ist, dass infolge des Empfangs einer Nachricht entsprechend mindestens einem Optimierungsparameter für die Empfangsbestätigungserzeugung in der Nachricht eine Empfangsbestätigung (11) erzeugt wird, wobei die Empfangsbestätigung den Empfang der Anweisungen an dem Nachrichten-Handler (5) bestätigt; und
dass eine Kommunikationsschnittstelle (41) aus der Vielzahl von Kommunikationsschnittstellen derart gesteuert wird, dass sie die Empfangsbestätigung an den Router sendet.

8. Nachrichten-Handler-Vorrichtung nach Anspruch 7, wobei der mindestens eine Optimierungsparameter für die Empfangsbestätigungserzeugung einen Skalierungsfaktorparameter umfasst, der den Anteil von Nachrichten-Handlern angibt, von denen eine Empfangsbestätigung für die eine oder die mehreren Nachrichten gewünscht ist.

9. Nachrichten-Handler-Vorrichtung nach Anspruch 8, wobei der Skalierungsfaktorparameter einen Wert aufweist, der eine Zahl zwischen einer niedrigen Zahl umfasst, die angibt, dass keine Empfangsbestätigung erforderlich ist, und einer hohen Zahl, die angibt, dass eine Empfangsbestätigung erforderlich ist.

10. Nachrichten-Handler-Vorrichtung nach Anspruch 8 oder 9, wobei die Verarbeitungseinheit so betreibbar ist, dass eine zufällige Zahl erzeugt wird und die Empfangsbestätigung erzeugt wird, wenn die zufällige Zahl gleich dem oder niedriger als der Wert des Skalierungsfaktorparameters ist.

11. Nachrichten-Handler-Vorrichtung nach einem der Ansprüche 7 bis 10, wobei:
der mindestens eine Optimierungsparameter für die Empfangsbestätigungserzeugung eine Angabe zu einem Zeitfenster für den Empfang umfasst, innerhalb dessen der Nachrichten-Handler eine Empfangsbestätigung senden muss, sofern eine Empfangsbestätigung erforderlich ist, und wobei die Verarbeitungseinheit (42) so konfiguriert ist, dass die Kommunikationsschnittstelle derart gesteuert wird, dass die Empfangsbestätigung innerhalb des Zeitfensters für den Empfang gesendet wird; und/oder
die Nachricht (10) eine Angabe eines annehmbaren Nachrichtenübermittlungsverfahrens zum Senden der Empfangsbestätigung (11) umfasst und wobei die Verarbeitungseinheit (42) so konfiguriert ist, dass eine Schnittstelle (41) aus der Vielzahl von Kommunikationsschnittstellen ausgewählt wird, welche das annehmbare Nachrichtenübermittlungsverfahren unterstützt, um die Empfangsbestätigung zu senden; und/oder
die Verarbeitungseinheit (42) so konfiguriert ist, dass eine Schnittstelle (41) aus der Vielzahl von Kommunikationsschnittstellen derart gesteuert wird, dass die Empfangsbestätigung (11) über einen von den Netzwerkfunktionen unabhängigen Kanal gesendet wird; und/oder
die Verarbeitungseinheit (42) so konfiguriert ist, dass die Empfangsbestätigung (11) an eine in der einen oder den mehreren Nachrichten angegebene Adresse des Routers gesendet wird; und/oder
die eine oder die mehreren Nachrichten (10) eine Vielzahl von Nachrichten umfassen, wobei jede ein Segment der Anweisungen und eine Nachrichtenkennung umfassend eine Kennung für die Anweisungen und eine Kennung für das Segment der Vielzahl von Segmenten in der Nachricht umfasst, und wobei die Verarbeitungseinheit so betreibbar ist, dass eine Empfangsbestätigung (11) gesendet wird, sobald alle Segmente empfangen wurden, und dass die Kennung für die Anweisungen in der Empfangsbestätigung enthalten ist; und/oder
die Verarbeitungseinheit (42) so konfiguriert ist, dass eine Uhrzeit des Empfangs der einen oder der mehreren Nachrichten und eine Position des Nachrichten-Handlers in der Empfangsbestätigung (11) enthalten sind.

12. Ein Verfahren zur Handhabung von Anweisungen zur Fernsteuerung einer Vielzahl von Knoten (6) in einem Netzwerk, wobei das Verfahren Folgendes umfasst:
Verarbeiten einer empfangenen Anfrage (8) mit Anweisungen zur Steuerung einer Vielzahl von Knoten (6) in dem Netzwerk;
Erzeugen einer oder mehrerer den Anweisungen zugeordneter Nachrichten zur Übermittlung an eine oder mehrere Netzwerkfunktionen (4), derart, dass jede der einen oder der mehreren Netzwerkfunktionen die Anweisungen mittels einer jeweiligen Kommunikationstechnologie an einen oder mehrere Nachrichten-Handler weiterleitet, die so konfiguriert sind, dass sie als Schnittstelle zu der Vielzahl von Knoten dienen und sie dadurch steuern;
Enthalten mindestens eines Optimierungsparameters für die Empfangsbestätigungserzeugung in der einen oder den mehreren Nachrichten;
Veranlassen, dass die eine oder die mehreren Nachrichten an die ausgewählten Netzwerkfunktionen gesendet werden; und
Empfangen einer oder mehrerer den Anweisungen zugeordneter Empfangsbestätigungen (11), wobei die eine oder die mehreren Empfangsbestätigungen den Empfang der Anweisungen bestätigen, wobei die eine oder die mehreren Empfangsbestätigungen entsprechend dem mindestens einen Optimierungsparameter für die Empfangsbestätigungserzeugung übermittelt werden.

13. Ein Verfahren zur Bestätigung des Empfangs von Anweisungen zur Steuerung eines oder mehrerer Knoten aus einer Vielzahl von Knoten (6) in einem Netzwerk, wobei das Verfahren Folgendes umfasst:
Verarbeiten einer oder mehrerer empfangener Nachrichten (10) umfassend Anweisungen zur Steuerung des einen oder der mehreren Knoten, wobei die eine oder die mehreren Nachrichten über eine Netzwerkfunktion (4) von einem Router (3) zur Weiterleitung von Anweisungen an die Vielzahl von Knoten empfangen werden;
Steuern eines oder mehrerer Knoten entsprechend den Anweisungen;
Erzeugen einer Empfangsbestätigung (11) für die eine oder die mehreren Nachrichten entsprechend einem Optimierungsparameter für die Empfangsbestätigungserzeugung in der einen oder den mehreren Nachrichten, wobei die Empfangsbestätigung den Empfang der Anweisungen bestätigt; und
Veranlassen, dass die Empfangsbestätigung an den Router gesendet wird.

14. Ein Computerprogramm, so konfiguriert, dass es beim Betrieb durch eine Verarbeitungseinheit alle Schritte des Verfahrens nach Anspruch 12 oder Anspruch 13 ausführt.

15. Nachrichten-Handler-Vorrichtung (5) in einem Netzwerk zur Steuerung eines oder mehrerer aus einer Vielzahl von Knoten (6) in dem Netzwerk, wobei die Nachrichten-Handler-Vorrichtung Folgendes umfasst:
eine Vielzahl von Kommunikationsschnittstellen (41, 42), so konfiguriert, dass:
Nachrichten (10) mit Anweisungen zur Steuerung eines oder mehrerer Knoten von einer oder mehreren Netzwerkfunktionen (4) empfangen werden, wobei die Anweisungen von einem Router (3) an die eine oder die mehreren Netzwerkfunktionen zur Weiterleitung an den Nachrichten-Handler mittels einer jeweiligen Kommunikationstechnologie weitergeleitet wurden;
sie als Schnittstelle zu dem einen oder den mehreren Knoten dienen, um dadurch Anweisungen in den Nachrichten auf den Knoten auszuführen; und dass Nachrichtenempfangsbestätigungen an den Router gesendet werden; und
eine Verarbeitungseinheit (42), so konfiguriert, dass Informationen in den Nachrichten verarbeitet werden, Empfangsbestätigungen (11) erzeugt werden, wobei die Empfangsbestätigungen den Empfang der Anweisungen bestätigen, und die Vielzahl von Kommunikationsschnittstellen gesteuert wird, wobei die Verarbeitungseinheit so konfiguriert ist, dass eine Schnittstelle (41) aus der Vielzahl von Kommunikationsschnittstellen derart gesteuert wird, dass die Empfangsbestätigung über einen von der einen oder den mehreren Netzwerkfunktionen unabhängigen Kommunikationskanal an den Router gesendet wird.

## Revendications

1. Un appareil (3) dans un réseau d'acheminement d'instructions destinées à la commande à distance d'une pluralité de nœuds (6) dans le réseau, l'appareil comprenant :
une interface de communication (21) configurée de façon à : recevoir une demande (8) contenant des instructions destinées à la commande d'une pluralité de nœuds, communiquer avec une ou plusieurs capacités de réseau (4) de sorte que chacune des une ou plusieurs capacités de réseau envoie des messages au moyen d'une technologie de communication respective à un ou plusieurs gestionnaires de messages (5) qui sont configurés de façon à s'interfacer avec et ainsi commander la pluralité de nœuds, et recevoir des reçus à partir des un ou plusieurs gestionnaires de messages, et
un module de traitement de messages (22) configuré de façon à : générer un ou plusieurs messages (9), en fonction des instructions dans la demande reçue et comprenant en outre au moins un paramètre optimiseur de génération de reçus, le au moins un paramètre optimiseur de génération de reçus étant destiné à la gestion d'un trafic généré par la transmission de reçus (11), les reçus accusant réception des instructions au niveau des un ou plusieurs gestionnaires de messages, et amener les un ou plusieurs messages générés à être transmis aux une ou plusieurs capacités de réseau par l'intermédiaire de l'interface de communication.

2. L'appareil selon la Revendication 1, où le au moins un paramètre optimiseur de génération de reçus comprend un paramètre qui indique la proportion de gestionnaires de messages (5) à partir desquels un reçu aux un ou plusieurs messages est requis.

3. L'appareil selon la Revendication 2, où le au moins un paramètre optimiseur de génération de reçus possède une valeur qui comprend un nombre entre un nombre peu élevé, indiquant qu'aucun gestionnaire de messages (5) n'a à envoyer des reçus, et un nombre élevé, indiquant que la totalité des gestionnaires de messages qui agissent sur les instructions doivent envoyer des reçus.

4. L'appareil selon la Revendication 1, 2 ou 3 où :
le au moins un paramètre optimiseur de génération de reçus comprend un paramètre (54b) qui indique une fenêtre temporelle à l'intérieur de laquelle un gestionnaire de messages (5) doit envoyer un reçu si un reçu est requis, et/ou
le module de traitement de messages (22) est configuré en outre de façon à inclure une indication (65) d'un procédé acceptable d'envoi de reçus dans les un ou plusieurs messages, et/ou
l'interface de communication (21) est configurée de façon à recevoir les reçus à partir des un ou plusieurs gestionnaires de messages par l'intermédiaire d'un canal de communication indépendant des une ou plusieurs capacités de réseau (4), et/ou
le module de traitement de messages (22) est configuré en outre de façon à inclure une adresse (66) de l'appareil (3) dans les un ou plusieurs messages auquel des reçus doivent être envoyés, et/ou
le reçu contient au moins un élément parmi une heure de réception (131) des un ou plusieurs messages par le gestionnaire de messages, l'emplacement (133) du gestionnaire de messages et un identifiant (52) pour les instructions, et/ou
le module de traitement de messages (22) est conçu en outre de façon à générer un résumé de reçu (S14.4) en fonction de reçus qui ont été reçus aux un ou plusieurs messages et à amener le résumé de reçu à être envoyé à un client associé à la demande contenant les instructions.

5. L'appareil selon la Revendication 4, où le module de traitement de messages (22) est configuré en outre de façon à inclure une indication dans les un ou plusieurs messages d'un procédé acceptable d'envoi de reçus et où l'indication d'un procédé acceptable d'envoi de reçus comprend une indication indiquant que des messages doivent être envoyés par l'intermédiaire d'un élément parmi un service d'envoi de messages courts ou un réseau Internet des objets à bande étroite.

6. L'appareil selon l'une quelconque des Revendications précédentes, où la pluralité de nœuds (6) comprend au moins un élément parmi un compteur, un dispositif thermique, un générateur et un chargeur.

7. Un appareil gestionnaire de messages (5) dans un réseau destiné à la commande d'un ou de plusieurs nœuds d'une pluralité de nœuds (6) dans le réseau, l'appareil gestionnaire de messages comprenant :
une pluralité d'interfaces de communication (41, 44), configurées de façon à :
recevoir des messages (10) à partir d'une ou de plusieurs capacités de réseau (4) avec des instructions destinées à la commande d'un ou de plusieurs nœuds, les instructions ayant été acheminées par un routeur (3) aux une ou plusieurs capacités de réseau pour un transfert vers le gestionnaire de messages au moyen d'une technologie de communication respective,
s'interfacer avec les un ou plusieurs nœuds de façon à exécuter ainsi des instructions dans les messages sur les nœuds, et à envoyer des reçus de message au routeur, et
un processeur (42) configuré de façon à :
traiter des informations dans les messages, et commander la pluralité d'interfaces de communication, où le processeur est conçu de façon à générer un reçu (11) en réponse à la réception d'un message conformément à au moins un paramètre optimiseur de génération de reçus dans le message, où le reçu accuse réception des instructions au niveau du gestionnaire de messages (5), et
commander une interface de communication (41) de la pluralité d'interfaces de communication de façon à envoyer le reçu au routeur.

8. L'appareil gestionnaire de messages selon la Revendication 7, où le au moins un paramètre optimiseur de génération de reçus comprend un paramètre facteur d'échelle qui indique la proportion de gestionnaires de messages à partir desquels un reçu aux un ou plusieurs messages est souhaité.

9. L'appareil gestionnaire de messages selon la Revendication 8, où le paramètre facteur d'échelle possède une valeur qui comprend un nombre entre un nombre peu élevé, indiquant qu'aucun reçu n'est requis, et un nombre élevé, indiquant qu'un reçu est requis.

10. L'appareil gestionnaire de messages selon la Revendication 8 ou 9, où le processeur est conçu de façon à générer un nombre aléatoire et à générer le reçu si le nombre aléatoire est égal ou inférieur à la valeur du paramètre facteur d'échelle.

11. L'appareil gestionnaire de messages selon l'une quelconque des Revendications 7 à 10, où :
le au moins un paramètre optimiseur de génération de reçus comprend une indication de fenêtre temporelle de réception à l'intérieur de laquelle le gestionnaire de messages doit envoyer un reçu, si un reçu est requis, et le processeur (42) est configuré de façon à commander l'interface de communication de façon à envoyer le reçu à l'intérieur de la fenêtre temporelle de réception, et/ou
le message (10) contient une indication d'un procédé de messagerie acceptable destiné à l'envoi du reçu (11) et où le processeur (42) est configuré de façon à sélectionner une interface (41), de la pluralité d'interfaces de communication qui prend en charge le procédé de messagerie acceptable afin d'envoyer le reçu, et/ou
le processeur (42) est configuré de façon à commander une interface (41) de la pluralité d'interfaces de communication de façon à envoyer le reçu (11) par l'intermédiaire d'un canal indépendant des capacités de réseau, et/ou
le processeur (42) est configuré de façon à envoyer le reçu (11) à une adresse du routeur indiquée dans les un ou plusieurs messages, et/ou
les un ou plusieurs messages (10) comprennent une pluralité de messages, chacun d'eux comprenant un segment des instructions et un identifiant de message comprenant un identifiant destiné aux instructions et un identifiant destiné au segment de la pluralité de segments dans le message et où le processeur est conçu de façon à envoyer un reçu (11) une fois que la totalité des segments ont été reçus et à inclure l'identifiant destiné aux instructions dans le reçu, et/ou
le processeur (42) est configuré de façon à inclure une heure de réception des un ou plusieurs messages et un emplacement du gestionnaire de messages dans le reçu (11).

12. Un procédé de gestion d'instructions destinées à la commande à distance d'une pluralité de nœuds (6) dans un réseau, le procédé comprenant :
le traitement d'une demande reçue (8) avec des instructions destinées à la commande d'une pluralité de nœuds (6) dans le réseau,
la génération d'un ou de plusieurs messages associés aux instructions destinés à la transmission à une ou plusieurs capacités de réseau (4), de sorte que chacune des une ou plusieurs capacités de réseau transfère les instructions au moyen d'une technologie de communication respective à un ou plusieurs gestionnaires de messages qui sont configurés de façon à s'interfacer avec et ainsi commander la pluralité de nœuds,
l'inclusion dans les un ou plusieurs messages d'au moins un paramètre optimiseur de génération de reçus,
l'opération consistant à amener les un ou plusieurs messages à être envoyés aux capacités de réseau sélectionnées, et
la réception d'un ou de plusieurs reçus (11), associés aux instructions, où les un ou plusieurs reçus accusent réception des instructions, les un ou plusieurs reçus étant transmis conformément au au moins un paramètre optimiseur de génération de reçus.

13. Un procédé d'accusé de réception d'instructions destinées à la commande d'un ou de plusieurs nœuds d'une pluralité de nœuds (6) dans un réseau, le procédé comprenant :
le traitement d'un ou de plusieurs messages reçus (10) contenant des instructions destinées à la commande des un ou plusieurs nœuds, les un ou plusieurs messages étant reçus, par l'intermédiaire d'une capacité de réseau (4), à partir d'un routeur (3) pour l'acheminement d'instructions à la pluralité de nœuds,
la commande d'un ou de plusieurs nœuds conformément aux instructions,
la génération d'un reçu (11) aux un ou plusieurs messages conformément à un paramètre optimiseur de génération de reçus dans les un ou plusieurs messages, où le reçu accuse réception des instructions, et
l'opération consistant à amener le reçu à être envoyé au routeur.

14. Un programme informatique configuré, lorsqu'il est actionné par un processeur, de façon à exécuter la totalité des opérations du procédé selon la Revendication 12 ou 13.

15. Un appareil gestionnaire de messages (5) dans un réseau destiné à la commande d'un ou de plusieurs nœuds d'une pluralité de nœuds (6) dans le réseau, l'appareil gestionnaire de messages comprenant :
une pluralité d'interfaces de communication (41, 42) configurées de façon à :
recevoir des messages (10) à partir d'une ou de plusieurs capacités de réseau (4) avec des instructions destinées à la commande d'un ou de plusieurs nœuds, les instructions ayant été acheminées par un routeur (3) aux une ou plusieurs capacités de réseau pour un transfert vers le gestionnaire de messages au moyen d'une technologie de communication respective,
s'interfacer avec les un ou plusieurs nœuds de façon à exécuter ainsi des instructions dans les messages sur les nœuds, et envoyer des reçus de message au routeur, et
un processeur (42) configuré de façon à traiter des informations dans les messages, à générer des reçus (11), où les reçus accusent réception des instructions, et à commander la pluralité d'interfaces de communication, le processeur étant configuré de façon à commander une interface (41) de la pluralité d'interfaces de communication de façon à envoyer le reçu au routeur par l'intermédiaire d'un canal de communication indépendant des une ou plusieurs capacités de réseau.
